# EUROPEAN PATENT SPECIFICATION

(11) **EP 4 193 633 B1**
(45) Date of publication and mention of the grant of the patent: **30.10.2024**
(21) Application number: 21752209.3
(22) Date of filing: 30.07.2021
(51) Int. Cl.: H04W 16/10, H04W 28/086, H04W 40/00, H04W 72/20, H04W 72/51, H04W 88/08, H04W 76/15, H04B 7/155

(54) **RESOURCE COORDINATION AMONG MULTIPLE INTEGRATED ACCESS BACKHAUL (IAB) PARENT NODES**
RESSOURCENKOORDINATION ZWISCHEN PARENT-KNOTEN MIT MEHRFACHEM INTEGRIERTEM ZUGANGS-BACKHAUL (IAB)
COORDINATION DE RESSOURCES ENTRE DE MULTIPLES NOEUDS PARENTS DE RACCORDEMENT D'ACCÈS INTÉGRÉ (IAB)

(30) Priority: 07.08.2020 US 202063062893 P
(43) Date of publication of application: 14.06.2023
(73) Proprietor: Telefonaktiebolaget LM Ericsson (publ), 164 83 Stockholm (SE)
(72) Inventor: HUANG, Yezi, 187 46 Täby (SE); BAO, Lei, 412 64 Göteborg (SE); ÅSTRÖM, Magnus, 224 80 Lund (SE); DORTSCHY, Boris, 136 70 Vendelsö (SE); MAKKI, Behrooz, 435 43 Pixbo (SE)
(74) Representative: Ericsson
(86) International application number: PCT/IB2021/056972
(87) International publication number: WO 2022/029580

(56) References cited:
- WO-A1-2021/028015
- US-A1- 2020 100 124
- US-A1- 2020 145 965
- QUALCOMM INCORPORATED: "Resource Management in IAB Network", vol. RAN WG1, no. Spokane, US; 20181112 - 20181116, 11 November 2018 (2018-11-11), XP051555458, Retrieved from the Internet <URL:http://www.3gpp.org/ftp/Meetings%5F3GPP%5FSYNC/RAN1/Docs/R1%2D1813419%2Ezip> [retrieved on 20181111]
- ERICSSON: "Resource multiplexing and DC in enhanced IAB", vol. RAN WG1, no. Online; 20210510 - 20210527, 11 May 2021 (2021-05-11), XP052006465, Retrieved from the Internet <URL:https://ftp.3gpp.org/tsg_ran/WG1_RL1/TSGR1_105-e/Docs/R1-2105852.zip R1-2105852 Resource multiplexing and DC in enhanced IAB.docx> [retrieved on 20210511]

## Description

### TECHNICAL FIELD

The present application relates generally to the field of wireless communication networks, and more specifically to integrated access backhaul (IAB) networks in which the available wireless communication resources are shared between user access to the network and backhaul of user traffic within the network (e.g., to/from a core network).

### BACKGROUND

Currently the fifth generation ("5G") of cellular systems, also referred to as New Radio (NR), is being standardized within the Third-Generation Partnership Project (3GPP). NR is developed for maximum flexibility to support multiple and substantially different use cases. These include enhanced mobile broadband (eMBB), machine type communications (MTC), ultra-reliable low latency communications (URLLC), side-link device-to-device (D2D), and several other use cases.

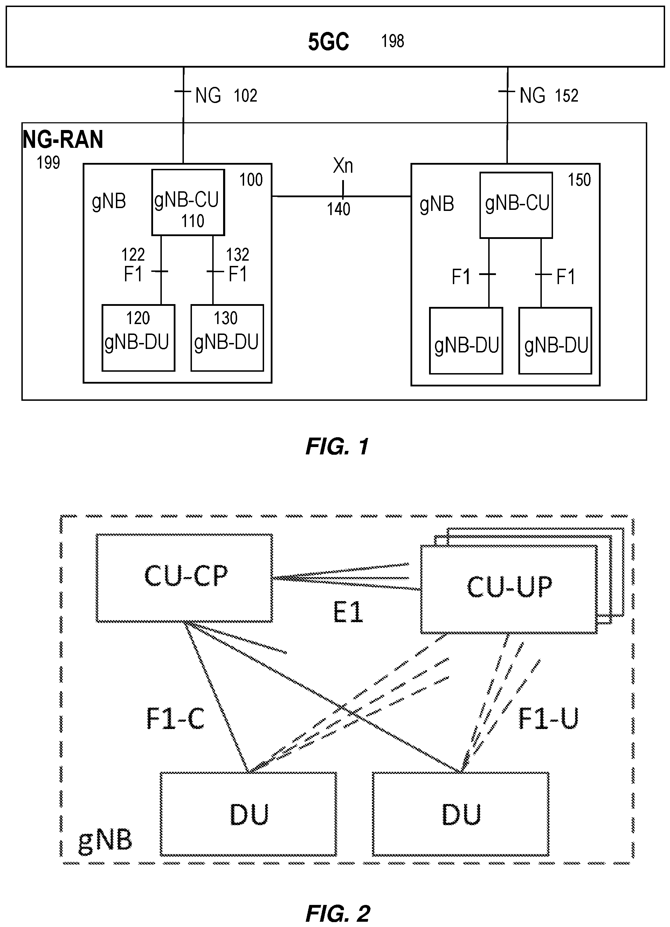

Figure 1 illustrates a high-level view of the 5G network architecture, consisting of a Next Generation RAN (NG-RAN) 199 and a 5G Core (5GC) 198. NG-RAN 199 can include one or more gNodeB's (gNBs) connected to the 5GC via one or more NG interfaces, such as gNBs 100, 150 connected via interfaces 102, 152, respectively. More specifically, gNBs 100, 150 can be connected to one or more Access and Mobility Management Functions (AMFs) in the 5GC 198 via respective NG-C interfaces. Similarly, gNBs 100, 150 can be connected to one or more User Plane Functions (UPFs) in 5GC 198 via respective NG-U interfaces. Various other network functions (NFs) can be included in the 5GC 198, including Session Management Function(s) (SMF).

Although not shown, in some deployments 5GC 198 can be replaced by an Evolved Packet Core (EPC), which conventionally has been used together with a Long-Term Evolution (LTE) Evolved UMTS RAN (E-UTRAN). In such deployments, gNBs 100, 150 can connect to one or more Mobility Management Entities (MMEs) in EPC 198 via respective S1-C interfaces. Similarly, gNBs 100, 150 can connect to one or more Serving Gateways (SGWs) in EPC via respective NG-U interfaces.

In addition, the gNBs can be connected to each other via one or more Xn interfaces, such as Xn interface 140 between gNBs 100 and 150. The radio technology for the NG-RAN is often referred to as NR. With respect to the NR interface to UEs, each of the gNBs can support frequency division duplexing (FDD), time division duplexing (TDD), or a combination thereof.

NG-RAN 199 is layered into a Radio Network Layer (RNL) and a Transport Network Layer (TNL). The NG-RAN architecture, *i.e.,* the NG-RAN logical nodes and interfaces between them, is defined as part of the RNL. For each NG-RAN interface (NG, Xn, F1) the related TNL protocol and the functionality are specified. The TNL provides services for user plane transport and signaling transport.

The NG RAN logical nodes shown in Figure 1 include a Central Unit (CU or gNB-CU) and one or more Distributed Units (DU or gNB-DU). For example, gNB 100 includes gNB-CU 110 and gNB-DUs 120 and 130. CUs *(e.g.,* gNB-CU 110) are logical nodes that host higher-layer protocols and perform various gNB functions such as controlling the operation of DUs. A DU *(e.g.,* gNB-DUs 120, 130) is a decentralized logical node that hosts lower layer protocols and can include, depending on the functional split option, various subsets of the gNB functions. As such, each of the CUs and DUs can include various circuitry needed to perform their respective functions, including processing circuitry, transceiver circuitry (e.g., for communication), and power supply circuitry. Moreover, the terms "central unit" and "centralized unit" are used interchangeably herein, as are the terms "distributed unit" and "decentralized unit."

A gNB-CU connects to one or more gNB-DUs over respective F1 logical interfaces, such as interfaces 122 and 132 shown in Figure 1. F1 supports control plane (CP) and user plane (UP) separation into respective FLAP protocol and F1-U protocol, such that a gNB-CU may also be separated in CP and UP (discussed below). However, a gNB-DU can be connected to only a single gNB-CU. The gNB-CU and connected gNB-DU(s) are only visible to other gNBs and the 5GC as a gNB, i.e., the F1 interface is not visible beyond gNB-CU.

A CU can host protocols such as RRC and PDCP, while a DU can host protocols such as RLC, MAC and PHY. In other variants, the RLC protocol can be split between CU and DU, with Automatic Retransmission Request (ARQ) functionality in CU. In other variants, a CU can host RRC and PDCP, including for both UP (e.g., PDCP-U) and CP (e.g., PDCP-C) traffic.

Centralized control plane protocols *(e.g.,* PDCP-C and RRC) can be hosted in a different CU than centralized user plane protocols *(e.g.,* PDCP-U). In particular, a CU can be logically divided into a CU-CP function (including RRC and PDCP for signaling radio bearers) and CU-UP function (including PDCP for user plane). Figure 2 shows an exemplary gNB architecture that includes two DUs, a CU-CP, and one or more CU-UPs. As shown in Figure 2, a single CU-CP can be associated with multiple CU-UPs in a gNB. The CU-CP and CU-UP communicate with each other using the E1-AP protocol over the E1 interface, as specified in 3GPP TS 38.463 (v15.4.0). Furthermore, the F1 interface between CU and DU is functionally split into F1-C between DU and CU-CP and F1-U between DU and CU-UP. In any deployment scenario, at least one of the CU-CP and the CU-UP functions is centralized.

Densification via deployment of more and more base stations (e.g., macro or micro base stations) is one mechanism to satisfy the increasing demand for bandwidth and/or capacity in mobile networks, which is mainly driven by the increasing use of video streaming services. Due to the availability of more spectrum in the millimeter wave band, deploying small cells that operate in this band is an attractive deployment option for these purposes. However, the normal approach of connecting the small cells to the operator's backhaul network with optical fiber can be very expensive and impractical. Employing wireless links for connecting the small cells to the operator's network is a cheaper and more practical alternative.

One such approach is an Integrated Access and Backhaul (IAB) network where the operator can repurpose radio resources conventionally used for network access *(e.g.,* by wireless devices or UEs) for use to wirelessly connect small cells to the operator's backhaul network. Wireless relaying was studied earlier in 3GPP in the scope of LTE Rel-10 based on a Relay Node (RN) with the functionality of an LTE eNB and UE modem. The RN is connected to a donor eNB which has a S1/X2 proxy functionality hiding the RN from the rest of the network.

Similar IAB options can also be considered for 5G/NR networks. One difference compared to LTE is the gNB-CU/DU split architecture described above, which separates time critical RLC/MAC/PHY protocols from less time critical RRC/PDCP protocols. In general, the 3GPP NR IAB specifications reuse existing functions and interfaces defined in NR. Each IAB node can include the functionality of a gNB-DU (also referred to as "IAB-DU") that terminates the radio interface layers of access links towards served UEs and backhaul links towards immediately downstream (or "child") IAB nodes.

Each IAB node can also include a Mobile-Termination function (referred to as MT or "IAB-MT") that terminates the radio interface layers of a backhaul link towards an immediately upstream (or "parent") DU, i.e., either an IAB-DU or a donor DU. The MT functionality is similar to functionality that enables UEs to access the IAB network and has been specified as part of the Mobile Equipment (ME). In addition to the connection to downstream (or "descendant") IAB-MTs and/or UEs, each IAB-DU also has an upstream F1 connection to the CU part of a donor gNB, also referred to as an "IAB-donor CU". This connection is via a particular DU of the donor gNB, also referred to as an "IAB-donor DU". Each IAB-donor CU may be associated with multiple IAB-donor DUs, as illustrated in Figure 1.

IAB topology also allows one IAB node to connect to multiple parent nodes. Currently, it is used for back-up or redundancy purposes, e.g., in case of radio link failure of one parent node. It is desirable to use the redundant routes concurrently to achieve load balancing, reliability, etc. However, current solutions do not adequately support this arrangement.

Document US 2020/100124 A1 discloses a network management function of a relay network that may identify relay node support of multi-mobile terminal (MT) operation, and that may coordinate configuration of multiple backhaul links supported by the relay node via the multi -MT functionality of the relay node. In some cases, a relay node may transmit MT capabilities to the management function over a first established backhaul link, and the management function may configure a second backhaul link using a second MT function of the relay node. In other cases, the relay node may autonomously establish multi-MT connectivity based on preconfigured parent-selection policies, and the network management function may identify the relay node is dual-connected to the network management function. In either case, the network management function may configure backhaul routes (e.g., backhaul links) and resource configuration across the redundant topology.

Document D4 constitutes prior art under Article 54(3) EPC and discloses a distributed unit, DU, of a radio access node configured to operate in a scenario where the DU is one of multiple DUs serving links to a multi-connected entity. The DU acquires a first DU radio resource configuration for the DU, acquires a first link radio resource configuration corresponding to a first link of a multi-connectivity link of a multi -connected entity, wherein the first link is served by the DU, acquires a multiplexing configuration of the multi-connectivity link, and determines availability of at least one radio resource for the multi-connectivity link based on the first DU radio resource configuration, the first link radio resource configuration, and the multiplexing configuration.

### SUMMARY

Accordingly, embodiments of the present disclosure address these and other difficulties in integrating IAB nodes into a wireless network, thereby facilitating the otherwise-advantageous deployment of IAB solutions.

Embodiments of the present disclosure include methods (e.g., procedures) for IAB node configured to communicate with first and second parent nodes in a wireless network.

According to the present disclosure, there are provided methods, an IAB node, an IAB donor CU, a first parent node and a computer-readable medium according to the independent claims. Developments are set forth in the dependent claims.

These exemplary methods can include determining the IAB node's multiplexing capability between a first parent link with the first parent node and a second parent link with the second parent node; and sending an indication of the multiplexing capability to one or more ancestor nodes in the wireless network. In various embodiments, the one or more ancestor nodes can include any of the following: the first parent node, the second parent node, and an IAB donor CU that is an ancestor node of at least one of the first and second parent nodes.

Other embodiments include methods (e.g., procedures) for a first parent node of an IAB node in a wireless network. These exemplary methods can be performed by an IAB node (e.g., IAB-DU and IAB-MT).

These exemplary methods can include receiving, from the IAB node, an indication of multiplexing capability between a first parent link with the first parent node and a second parent link with a second parent node of the IAB node; receiving a second resource configuration for the second parent link; and determining availability of resources for the first parent link based on the indication of multiplexing capability and on the second resource configuration.

Other embodiments include IAB nodes *(e.g.,* IAB-MT and IAB-DU) or IAB donor CUs configured to perform operations corresponding to any of the exemplary methods described herein. Other embodiments also include non-transitory, computer-readable media storing computer-executable instructions that, when executed by processing circuitry, configure such IAB nodes or IAB donor CUs to perform operations corresponding to any of the exemplary methods described herein.

These and other embodiments described herein can reduce and/or minimize difficulties with resource coordination on respective links between multiple IAB parent nodes and a common IAB (child) node. By operating in this manner, embodiments can facilitate concurrent use of the multiple links, thereby improving data throughput, reliability, and/or load balancing in IAB networks.

These and other objects, features, and advantages of the present disclosure will become apparent upon reading the following Detailed Description in view of the Drawings briefly described below.

### BRIEF DESCRIPTION OF THE DRAWINGS

Figure 1 shows a high-level view of the 5G network architecture, including central unit (CU)-distributed unit (DU) split architecture of gNBs.
Figure 2 shows the control-plane (CP) and user-plane (UP) interfaces within the split CU-DU architecture shown in Figure 1.
Figure 3 shows a reference diagram for an integrated access backhaul (IAB) network in standalone mode.
Figure 4 illustrates parent and child relationships with respect to a particular IAB node.
Figure 5 shows an exemplary arrangement of CU, DU, and mobile terminal (MT) functionality in an IAB network.
Figure 6 shows two exemplary network topologies.
Figure 7 shows another IAB network topology that includes various multi-parent arrangements.
Figure 8 shows exemplary coordination relationships between IAB-MT and IAB--DU time resources in tabular form.
Figure 9 shows an exemplary method (*e.g*., procedure) for an IAB node, according to various embodiments of the present disclosure.
Figure 10 shows an exemplary method (*e.g*., procedure) for an IAB donor CU, according to various embodiments of the present disclosure.
Figure 11 shows an exemplary method (*e.g.,* procedure) for a first parent node of an IAB node, according to various embodiments of the present disclosure.
Figure 12 shows an exemplary embodiment of a wireless network, in accordance with various aspects described herein.
Figure 13 is a block diagram illustrating an exemplary virtualization environment usable for implementation of various embodiments of network nodes described herein.

### DETAILED DESCRIPTION

Embodiments briefly summarized above will now be described more fully with reference to the accompanying drawings. These descriptions are provided by way of example to explain the subject matter to those skilled in the art and should not be construed as limiting the scope of the subject matter to only the embodiments described herein. More specifically, examples are provided below that illustrate the operation of various embodiments according to the advantages discussed above.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods and/or procedures disclosed herein do not have to be performed in the exact order disclosed, unless a step is explicitly described as following or preceding another step and/or where it is implicit that a step must follow or precede another step. Any feature of any of the embodiments disclosed herein can be applied to any other embodiment, wherever appropriate. Likewise, any advantage of any of the embodiments can apply to any other embodiments, and vice versa. Other objectives, features and advantages of the enclosed embodiments will be apparent from the following description.

Furthermore, the following terms are used throughout the description given below:
- Radio Access Node: As used herein, a "radio access node" (or equivalently "radio network node," "radio access network node," or "RAN node") can be any node in a radio access network (RAN) of a cellular communications network that operates to wirelessly transmit and/or receive signals. Some examples of a radio access node include, but are not limited to, a base station *(e.g.,* a NR base station (gNB) in a 3GPP 5G NR network or an enhanced or evolved Node B (eNB) in a 3GPP LTE network), base station distributed components *(e.g.,* CU and DU), a high-power or macro base station, a low-power base station (*e.g.,* micro, pico, femto, or home base station, or the like), an IAB node (or component thereof such as MT or DU), a transmission point, a remote radio unit (RRU or RRH), and a relay node.
- Core Network Node: As used herein, a "core network node" is any type of node in a core network. Some examples of a core network node include, *e.g.,* an MME, an SGW, a Packet Data Network Gateway (P-GW), an AMF, a user plane function (UPF), a Service Capability Exposure Function (SCEF), or the like.
- Wireless Device: As used herein, a "wireless device" (WD) is any type of device that has access to (*i.e.,* is served by) a cellular communications network by communicating wirelessly with network nodes and/or other wireless devices. Communicating wirelessly can involve transmitting and/or receiving wireless signals using electromagnetic waves, radio waves, infrared waves, and/or other types of signals suitable for conveying information through air. Unless otherwise noted, the term "wireless device" is used interchangeably herein with "user equipment" (UE). Some examples of a wireless device include, but are not limited to, smart phones, mobile phones, cell phones, voice over IP (VoIP) phones, wireless local loop phones, desktop computers, personal digital assistants (PDAs), wireless cameras, gaming consoles or devices, music storage devices, playback appliances, wearable devices, wireless endpoints, mobile stations, tablets, laptops, laptop-embedded equipment (LEE), laptop-mounted equipment (LME), smart devices, wireless customer-premise equipment (CPE), mobile-type communication (MTC) devices, Internet-of-Things (IoT) devices, vehicle-mounted wireless terminal devices, mobile terminals (MTs), *etc.*
- Radio Node: As used herein, a "radio node" can be either a "radio access node" (or equivalent term) or a "wireless device."
- Network Node: As used herein, a "network node" is any node that is either part of the radio access network *(e.g.,* a radio access node or equivalent term) or of the core network (*e.g.,* a core network node discussed above) of a cellular communications network. Functionally, a network node is equipment capable, configured, arranged, and/or operable to communicate directly or indirectly with a wireless device and/or with other network nodes or equipment in the cellular communications network, to enable and/or provide wireless access to the wireless device, and/or to perform other functions (e.g., administration) in the cellular communications network.
- Node: As used herein, the term "node" (without any prefix) can be any type of node that is capable of operating in or with a wireless network (including a RAN and/or a core network), including a radio access node (or equivalent term), core network node, or wireless device.
- Parent Node: As used herein, the term "parent node" (or "parent IAB node") refers to a node immediately upstream from a particular IAB node in an IAB network (e.g., an IAB node one hop closer to a donor gNB). Even so, a parent node may be only one of the nodes upstream from the particular IAB node in the network, e.g., if there are multiple hops to a donor gNB.
- Ancestor Node: As used herein, the term "ancestor node" refers to any node upstream from a particular IAB node (e.g., towards a donor gNB) in an IAB network, including a parent node.
- Child node: As used herein, the term "child node" (or "child IAB node') refers to a node immediately downstream from a particular IAB node *(e.g.,* an IAB node one hop further from a donor gNB) in an IAB network. Even so, a child node may be only one of the nodes downstream from the particular IAB node in the network, e.g., if there are multiple hops to served UEs.
- Descendant Node: As used herein, the term "descendant node" refers to any node downstream from a particular IAB node (e.g., away from a donor gNB) in an IAB network, including a child node.

Note that the description given herein focuses on a 3GPP cellular communications system and, as such, 3GPP terminology or terminology similar to 3GPP terminology is generally used. However, the concepts disclosed herein are not limited to a 3GPP system. Other wireless systems, including without limitation Wide Band Code Division Multiple Access (WCDMA), Worldwide Interoperability for Microwave Access (WiMax), Ultra Mobile Broadband (UMB) and Global System for Mobile Communications (GSM), may also benefit from the concepts, principles, and/or embodiments described herein.

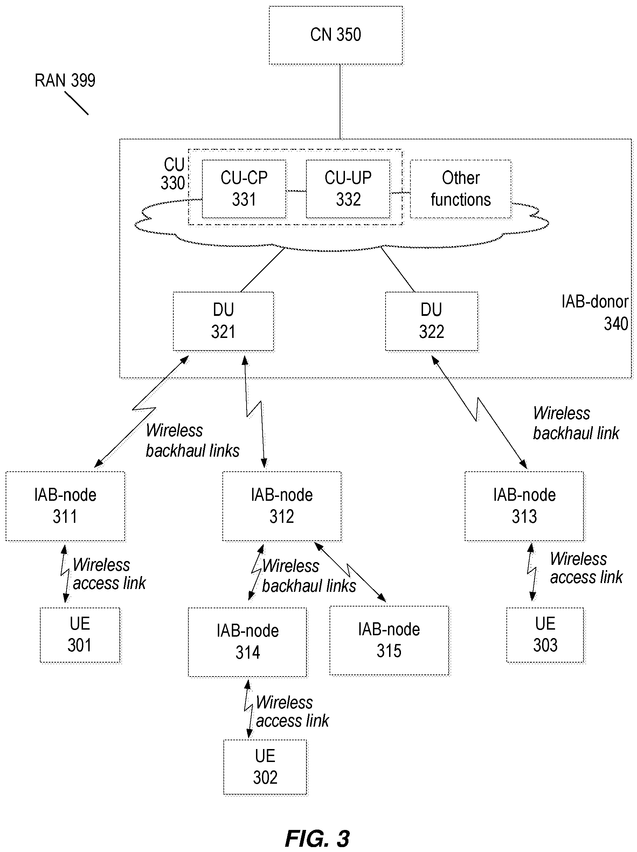

Figure 3 shows a reference diagram for an IAB network in standalone mode, as further explained in 3GPP TR 38.874 (version 0.2.1). The IAB network shown in Figure 3 includes one IAB-donor 340 and multiple IAB-nodes 311-315, all of which can be part of a radio access network (RAN 399) such as an NG-RAN. IAB donor 340 includes DUs 321, 322 connected to a CU 330, which is represented by functions CU-CP 331 and CU-UP 332. IAB donor 340 can communicate with core network (CN) 350 via the CU functionality shown.

Each of the IAB nodes 311-315 connects to the IAB-donor via one or more wireless backhaul links (also referred to herein as "hops"). More specifically, the MT function of each IAB-node 311-315 terminates the radio interface layers of a wireless backhaul link towards a corresponding ancestor DU function. This MT functionality is similar to functionality that enables UEs to access the IAB network and, in fact, has been specified by 3GPP as part of the Mobile Equipment (ME). However, IAB functionality is transparent to UEs, such that UEs are unaware if they are being served by a conventional gNB or an IAB-donor node or IAB nodes.

In the context of Figure 3, ancestor DUs can include either DU 321 or 322 of IAB donor 340 and, in some cases, a DU function of an intermediate IAB node that is descendant from IAB donor 340. As a more specific example, IAB-node 314 is descendant from IAB-node 312 and DU 321, IAB-node 312 is an ancestor of IAB-node 314 but a descendant of DU 321, and DU 321 is an ancestor of IAB-nodes 312 and 314. The DU functionality of IAB nodes 311-315 also terminates the radio interface layers of wireless access links towards UEs *(e.g.,* for network access via the DU) and wireless backhaul links towards other descendant IAB nodes. Accordingly, IAB-nodes 311, 313, and 314 can be considered "access IAB nodes" for UEs 301, 303, and 302, respectively, and that term will be used in the same manner hereinafter.

As shown in Figure 3, IAB-donor 340 can be treated as a single logical node that comprises a set of functions such as gNB-DUs 321-322, gNB-CU-CP 331, gNB-CU-UP 332, and possibly other functions. In some deployments, the IAB-donor can be split according to these functions, which can all be either co-located or non-co-located as allowed by the 3GPP NG-RAN architecture. Also, some of the functions presently associated with the IAB-donor can be moved outside of the IAB-donor if such functions do not perform IAB-specific tasks.

In general, the existing MT, gNB-DU, gNB-CU, UPF, AMF, and SMF as well as the corresponding interfaces NR Uu (between MT and gNB), F1, NG, X2 and N4 are used as baseline for the IAB architectures. For example, each IAB-node DU connects to the IAB-donor CU using a modified form of F1, which is referred to as F1*. The user-plane portion of F1* (referred to as "F1*-U") runs over RLC channels on the wireless backhaul between the MT on the serving IAB-node and the DU on the IAB donor.

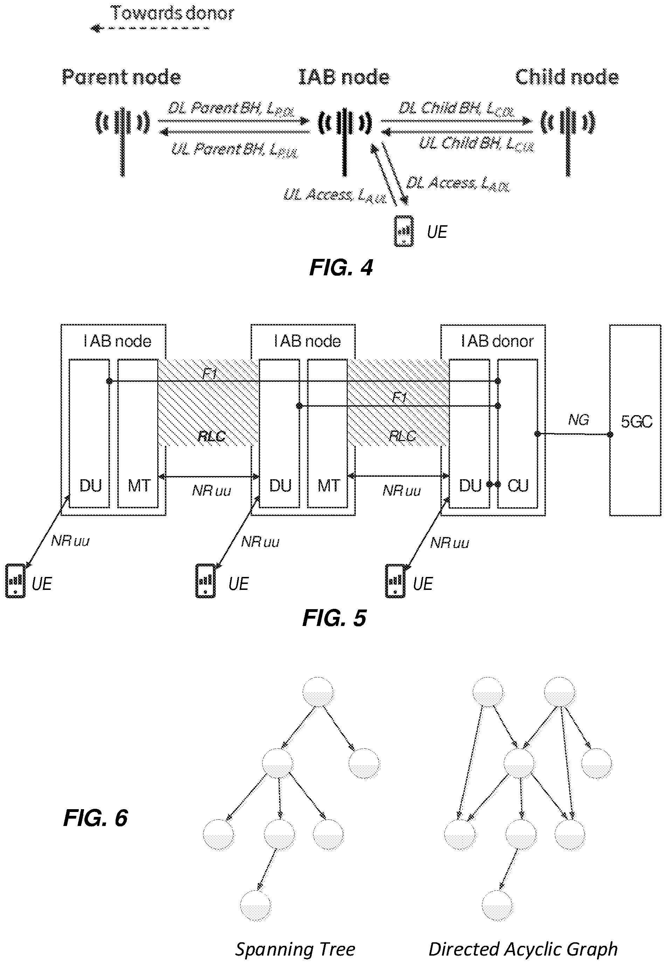

Figure 4 illustrates parent and child relationships with respect to a particular IAB node. Furthermore, the backhaul (BH) link between the parent node and the IAB node is referred to as parent BH link, whereas the backhaul link between the IAB node and the child node is referred to as child BH link. Each of these BH links include uplink (UL) and downlink (DL). Figure 4 also shows UL and DL access links from the intermediate IAB node to a UE.

As mentioned above, the IAB architecture also adopts the CU/DU split of gNBs in which more time-critical functionality is placed closer to the radio in the DU and less time-critical functionality is placed in the CU. In general, an IAB donor CU contains all gNB-CU functions of all descendant IAB nodes relative to that IAB donor and connects to the 5GC via the NG interface. Each IAB node then hosts the gNB-DU function that handles downstream communications as well as an MT function that handles upstream communication. The MT is a logical unit that provides UE-like functions. Each IAB-DU establishes RLC channels to UEs and/or to MTs of connected IAB-node. Each IAB-MT establishes BH radio interface towards the parent IAB-node or IAB-donor. Figure 5 shows an exemplary arrangement of CU, DU, and MT functionality in an IAB network.

Wireless BH links - including IAB - are vulnerable to blockage, e.g., due to moving objects such as vehicles, seasonal changes (foliage), severe weather conditions (rain, snow or hail), or infrastructure changes (new buildings). Traffic variations can also create uneven load distribution on wireless BH links, leading to link- or node-level congestion. In view of those concerns, IAB topology supports redundant paths as another difference from Rel-10 LTE relay.

Figure 6 shows two exemplary IAB network topologies. More specifically, the left side of Figure 6 shows a spanning tree (ST) topology, in which there is only one route between each IAB-node and IAB-donor. In other words, each IAB node has only a single parent node but can have one or more child nodes. Additionally, the right side of Figure 6 shows a directed acyclic graph (DAG) topology that supports redundant routes between IAB-nodes and the IAB donor CU. In other words, each IAB node can have one or more parent nodes and one or more child nodes.

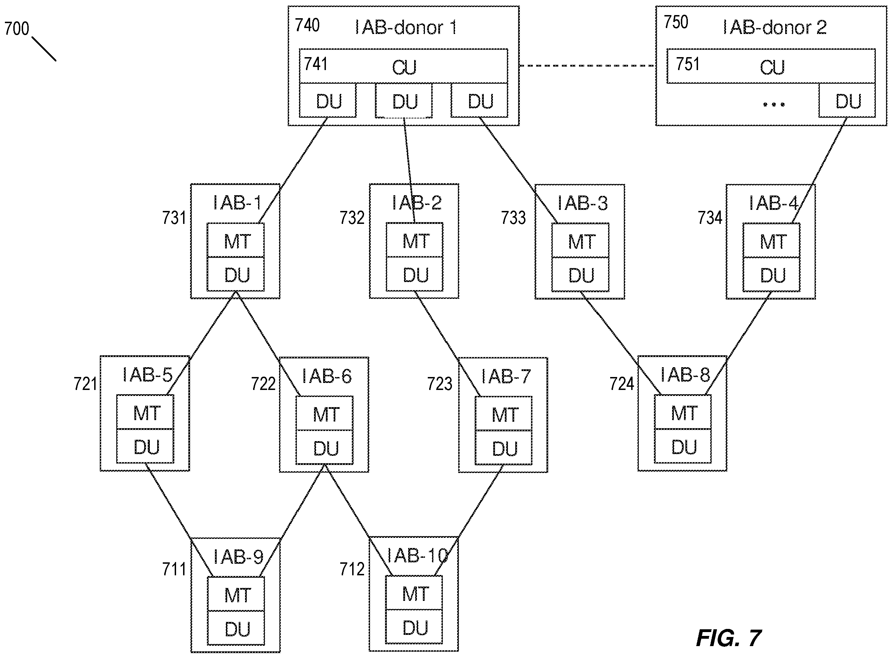

Figure 7 shows an exemplary IAB network (700) that includes various multi-parent arrangements. In particular, IAB-9 (711) connects to IAB-donor 1 (740) via two parent nodes IAB-5 (721) and IAB-6 (722), which connect to the same parent node IAB-1 (731). Also, IAB-10 (712) connects to IAB-donor 1 (740) via two parent nodes IAB-6 (722) and IAB-7 (723), which have different parent nodes IAB-1 (731) and IAB-2 (732). In addition, IAB-8 (713) connects to two parent nodes IAB-3 (733) and IAB-4 (734), which connect to different IAB-donors (740 and 750). These arrangements are exemplary various other multi-parent arrangements. Each of the IAB donors includes a CU (741 and 751) and one or more DUs.

The multi-connectivity or route redundancy shown in Figures 6 and 7 may be used for back-up purposes. It is also desirable to use redundant routes concurrently to achieve load balancing, improve reliability, etc. To do so, however, resource coordination is required.

In case of in-band operation, an IAB node is typically subject to a half-duplex constraint, whereby it can only be in transmission or reception mode at any given time. Rel-16 IAB mainly considers the TDM case where the MT and DU resources of the same IAB-node are separated in time. Based on this consideration, various resource types have been defined for IAB-MT and DU.

For an IAB-MT, as defined in Rel-16, the link to the parent node can include DL time resources, UL time resources, and flexible (F) time resources. Likewise, for an IAB-DU, the link to the child node can include DL time resources, UL time resources, F time resources, and unavailable (NA) time resources (i.e., resources not to be used for communication on the DU child links). Each of the DL, UL, and F time resources of the DU child link can belong to one of the following two categories:
- Hard (H): The corresponding time resource is always available for the DU child link; and
- Soft (S): The availability of the corresponding time resource for the DU child link is explicitly and/or implicitly controlled by the parent node.

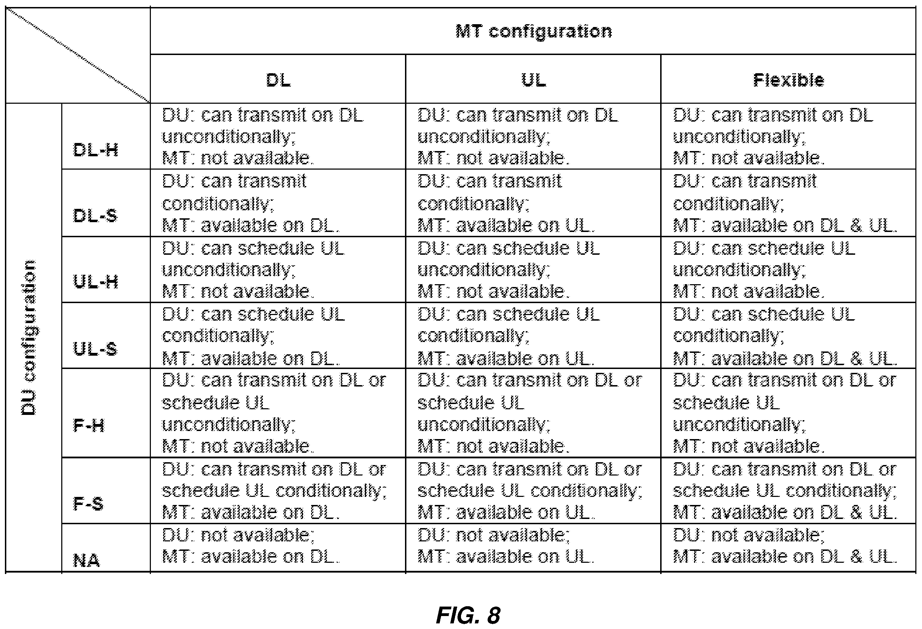

The IAB DU resources are configured per cell, and the H/S/NA attributes for the DU resource configuration are explicitly indicated per-resource type (D/U/F) in each slot. As a result, the semi-static time-domain resources of the IAB-DU can be of seven different types: DL-H, DL-S, UL-H, UL-S, F-H, F-S, and NA. Figure 8 shows exemplary coordination relationships between IAB-MT and IAB-DU time resources in tabular form.

Furthermore, an IAB-DU may correspond to multiple cells, including cells operating on different carrier frequencies. Similarly, an MT function may correspond to multiple carrier frequencies. This can either be implemented by one MT unit operating on multiple carrier frequencies or by multiple MT units, each operating on a different carrier frequency. The H/S/NA attributes for the per-cell DU resource configuration should take into account the associated MT carrier frequency(ies).

A configured Soft DU resource is by default unavailable if it is not indicated as available. The parent node can indicate availability implicitly or explicitly. In case of implicit indication, the IAB-node knows, via indirect means (e.g., lack of scheduling grant, no data available at MT, capability of simultaneous DU and MT, etc.) that the DU resource can be used without impacting the MTs ability to transmit and/or receive.

An IAB-node may also receive an explicit indication from the parent node about resource availability. The purpose of having the explicit indication is to allow for more dynamic utilization of the MT and DU resources. A new downlink control information (DCI) format, Format 2_5, and a new radio network temporary identifier, IA-RNTI, are defined to indicate DU-IA (DU indicated as available) to an IAB node. This DCI contains one or multiple fields, with each field value used as the index to an entry in an RRC-configured availability indicator (AI) AvailabilityCombination table. Each entry in the AI AvailabilityCombination table indicates the resource availability for a set of consecutive slots. Each element of each entry in the AI AvailabilityCombination table indicates the resource availability in a slot. Table 1 below shows an exemplary table with eight entries, each corresponding to a different combination of availabilities of D, U, and F resources.

**Table 1.**

| **Value** | **Meaning** |
|---|---|
| 0 | D soft resources: no indication of availability |
| | U soft resources: no indication of availability |
| | F soft resources: no indication of availability |
| 1 | D soft resources: indicated available |
| | U soft resources: no indication of availability |
| | F soft resources: no indication of availability |
| 2 | D soft resources: no indication of availability |
| | U soft resources: indicated available |
| | F soft resources: no indication of availability |
| 3 | D soft resources: indicated available |
| | U soft resources: indicated available |
| | F soft resources: no indication of availability |
| 4 | D soft resources: no indication of availability |
| | U soft resources: no indication of availability |
| | F soft resources: indicated available |
| 5 | D soft resources: indicated available |
| | U soft resources: no indication of availability |
| | F soft resources: indicated available |
| 6 | D soft resources: no indication of availability |
| | U soft resources: indicated available |
| | F soft resources: indicated available |
| 7 | D soft resources: indicated available |
| | U soft resources: indicated available |
| | F soft resources: indicated available |

However, the above-described resource coordination mechanisms are insufficient for concurrent use of redundant paths from a single IAB node to multiple parent nodes.

Embodiments of the present disclosure address these and other problems, difficulties, and/or issues by providing mechanisms for an IAB node, when connecting to multiple parent nodes, to provide one or more ancestor nodes information about the IAB node's capability to use multiple parent links concurrently. The ancestor nodes receiving such information can include the parent IAB nodes that provide the concurrent links, and/or a network function unit (e.g., IAB donor CU) that is responsible for resource configuration of the involved IAB nodes. Each of the parent nodes may be provided with the resource configuration of the other parent node(s) that provide the concurrent links to the IAB node.

In some embodiments, a prioritization order can be defined for the respective parent nodes when competing for a particular resource. In some embodiments, one or more of the parent nodes can also receive dynamic indication of the resource usage/allocation of one or more other parent nodes. Based on the received information, the network function unit can coordinate resource usage by the respective parent nodes, e.g., by assigning respective coordinated DU resource configurations. Based on the received information, the respective parent nodes can determine whether they can schedule transmission on particular radio resources on the respective links to the common IAB (child) node.

By operating in this manner, embodiments of the present disclosure can reduce and/or minimize difficulties with resource coordination on respective links between multiple IAB parent nodes and a common IAB (child) node. By operating in this manner, embodiments facilitate concurrent use of the multiple links, thereby improving data throughput, reliability, and/or load balancing in the IAB network.

In the following description, the term "resource" refers generally to both time and frequency resources, unless explicitly noted to the contrary.

At a high level, embodiments can be divided into three categories or groups: operations performed by the IAB (child) node having multiple parent nodes; operations performed by the respective parent nodes; and operations performed by a network function unit that is responsible for resource configuration of the involved IAB nodes (referred to hereinafter as "IAB donor CU" for brevity). Although the categories are described individually below, embodiments from the categories can be used cooperatively.

In some embodiments, when connecting to more than one parent node, an IAB node can determine its multiplexing capability between the respective links to the respective parent nodes (also referred to as "parent links"). For example, the multiplexing capability can be based on certain component carrier (CC) pairs and/or certain resource block (RB) group combinations. Furthermore, the multiplexing capability can include any of the following:
- TDM: some or all of the parent links cannot be used concurrently;
- FDM: some or all of the parent links can be used concurrently by dividing in frequency, including dividing by carrier; and
- spatial multiplexing (SDM): some or all of the parent links can be used concurrently on (partly) overlapped frequencies, such as by employing beamforming techniques.

After determining the multiplexing capability, the IAB node can send this information (or a representation of it, such as one or more indices) to the IAB donor CU and/or the respective parent nodes. In some embodiments, the IAB node can receive explicit DU soft resource availability indications (e.g., DCI Format 2_5) from more than one of the parent nodes. In this case, the IAB node determines whether it can use the DU resource based on the union of the received availability indications. For example, if the IAB node receives a first indication from a first parent node that the DU soft resource is available and receives a second indication from a second parent node that the DU soft resource is unavailable, the IAB node can determine that it cannot use the DU resource. In other words, the IAB node determines that it can use the DU soft resource only when both the first and second indications indicate availability.

In some embodiments, upon obtaining resource usage/allocation from a first parent node, the IAB node can provide such information to at least the second parent node. In some embodiments, parent nodes may have a prioritization order (e.g., assigned by IAB donor CU or negotiated among parent nodes) such that a higher-priority parent node can allocate certain resources before a lower-priority parent node can allocate these resources. The prioritization can be on a node basis, resource basis, UE basis, etc. For example, if the first parent node serves a master cell group (MCG) for the IAB (child) node and the second parent node serves a secondary cell group (SCG) for the IAB node, the first parent node can have higher priority. In some scenarios, the second parent node serving the SCG can have higher priority instead.

As mentioned above, the IAB donor CU is responsible for resource configuration of the descendant nodes in the IAB network, including the IAB (child) node and one or more of IAB node's parent nodes. When the IAB node connects to multiple parent nodes, the IAB donor CU can receive information about the IAB node's multiplexing capability between the respective parent links. The multiple capability information can include any of the information discussed above in relation to the IAB node operations.

In some embodiments, when one of the parent nodes belongs to another IAB donor CU, the two IAB donor CUs (e.g., first and second IAB donor CUs) can exchange information concerning the parent node(s) for which they are responsible. This information can include DU resource configurations - including D/U/F patterns, Hard/Soft/NA information, etc. - for the respective parent nodes. By doing so, the IAB donor CUs can avoid configuring conflicting resources to the respective parent nodes under their responsibility. For example, exchanging information can avoid configuring UL to a first parent IAB-DU while configuring DL to a second parent IAB-DU, or configuring resources that cannot be used simultaneously by the parent nodes as Hard (i.e., for both parent nodes).

In some embodiments, IAB donor CUs may have an assigned prioritization order such that a higher-priority IAB donor CU can allocate certain resources before a lower-priority IAB donor CU can allocate these resources. The prioritization can be on a node basis, resource basis, UE basis, etc. For example, if a first IAB donor CU is responsible for a first parent IAB node that serves an MCG for the IAB (child) node and a second IAB donor CU is responsible for a second parent IAB node that serves a SCG for the IAB node, the first IAB donor CU can have higher priority. In some scenarios, the second parent node serving the SCG can have higher priority instead.

After receiving the multiplexing capability information discussed above, the IAB donor CU can determine resource configurations for the respective parent nodes for which it is responsible. In case the IAB donor CU is responsible for all parent nodes of the IAB (child) node, it determines resource configuration for all of the parent nodes. Subsequently, the IAB donor CU can send the determined resource configurations to the respective parent nodes (i.e., for which it is responsible). In some embodiments, the IAB donor CU can send the resource configuration determined for one of the parent nodes (e.g., first parent node) to the other parent nodes (e.g., second parent node). More generally, the IAB donor CU can distribute the determined resource configurations among the parent nodes for the IAB (child) node as necessary, desirable, and/or practical.

Other embodiments involve operations by a first parent node of an IAB node that has parent links to the first parent node and at least a second parent node. In such embodiments, the first parent node may receive information on the multiplexing capability of the IAB node between the respective parent links. In some embodiments, the first parent node can receive DU resource configuration of the second parent node for the IAB (child) node. This information can be received from the second parent node or from a IAB donor CU that is responsible for both the first and second parent nodes.

Certain rules and/or procedures can be defined between the first and second parent nodes when competing for certain resources on the respective parent links towards the IAB (child) node. In some embodiments, the first and second parent nodes can determine a resource priority among them. For example, the higher-priority parent node can be the one serving an MCG for the IAB (child) node. In some embodiments, the first parent node can identify a resource-related condition with respect to one or more other parent nodes for the IAB (child) node (e.g., the second parent node), such as a resource collision condition, a resource starvation condition, etc.

In some embodiments, the first parent node can transmit and/or receive messages to/from other parent nodes (e.g., the second parent node) having links to the common IAB (child) node. For example, these messages can be exchanged directly between the nodes, via the common IAB (child) node (e.g., via MAC- or BAP-layer forwarding), or via an ancestor node (e.g., IAB node or IAB donor CU) that is common to all parent nodes.

The following non-limiting example illustrates principles of the various embodiments discussed above. Assume the first parent node (P1) has a higher priority than a second parent node (P2), and P1 and P2 cannot use a particular DU resource concurrently (as reported from the IAB node). For that DU resource:
- If P1's DU resource is configured as Hard, by knowing P1's configuration, P2 can determine the DU resource type is NA independent of its own configuration (H/S/NA).
- If P1's DU resource is configured as Soft while P2's DU resource is configured as Hard, by knowing P2's configuration, P1 can determine that the DU resource is NA.

When both P1 and P2 have configured a DU resource as Soft, P1 and/or P2 may take various actions. In some embodiments, by knowing P1's DU resource configuration, P2 can determine that the DU resource is not available for its use. In other embodiments, P2 can obtain information about P1's actual usage of the DU resource. P2 may use the resource for a particular direction (e.g., UL or DL) when the information indicates that P1 cannot or will not use the resource on that direction.

P1's actual usage of the DU resource can be indicated by a DCI format 2_5. In various embodiments, P2 can obtain such information in one of the following ways:
- P1 forwards the DCI Format 2_5 (any other indicator of resource availability) to P2 via the common IAB (child) node;
- P1 forwards the DCI Format 2_5 (any other indicator of resource availability) to P2 via a lower-layer channel between P1 and P2; or
- P1 forwards the DCI Format 2_5 (any other indicator of resource availability) to P2 via a node (e.g., IAB node or donor CU) that is a common parent to both P1 and P2.

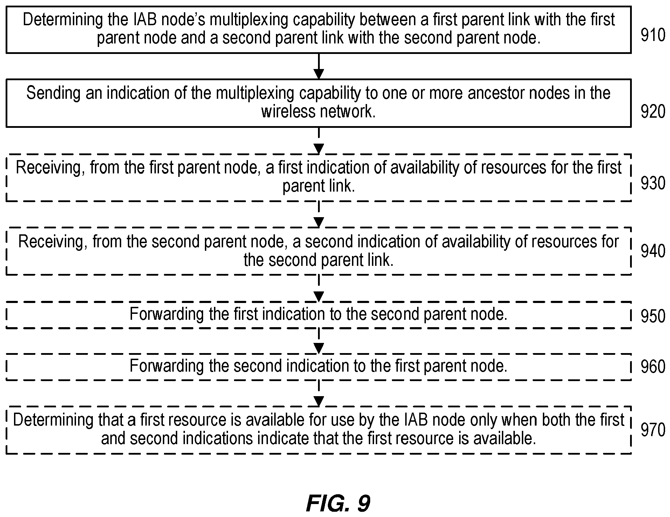

These embodiments described above can be further illustrated with reference to Figures 9-11, which depict exemplary methods (e.g., procedures) for an IAB node, an IAB donor CU, and a parent node, respectively. Put differently, various features of the operations described below correspond to various embodiments described above. The exemplary methods shown in Figures 9-11 can be complementary to each other such that they can be used cooperatively to provide benefits, advantages, and/or solutions to problems described herein. Although the exemplary methods are illustrated in Figures 9-11 by specific blocks in particular orders, the operations corresponding to the blocks can be performed in different orders than shown and can be combined and/or divided into blocks and/or operations having different functionality than shown. Optional blocks and/or operations are indicated by dashed lines.

More specifically, Figure 9 illustrates an exemplary method (e.g., procedure) for an IAB node configured to communicate with first and second parent nodes in a wireless network, according to various embodiments of the present disclosure. The exemplary method shown in Figure 9 can be performed by an IAB node (e.g., IAB-DU and IAB-MT) configured as described elsewhere herein.

The exemplary method can include the operations of block 910, where the IAB node can determine its (i.e., the IAB node's) multiplexing capability between a first parent link with the first parent node and a second parent link with the second parent node. The exemplary method can also include the operations of block 920, where the IAB node can send an indication of the multiplexing capability to one or more ancestor nodes in the wireless network. In various embodiments, the one or more ancestor nodes can include any of the following: the first parent node, the second parent node, and an IAB donor CU that is an ancestor node of at least one of the first and second parent nodes.

In some embodiments, the exemplary method can also include the operations of blocks 930-940. In block 930, the IAB node can receive, from the first parent node, a first indication of availability of resources for the first parent link. In block 940, the IAB node can receive, from the second parent node, a second indication of availability of resources for the second parent link. In some embodiments, the exemplary method can also include the operations of block 950, where the IAB node can forward the first indication to the second parent node, and/or block 960, where the IAB node can forward the second indication to the first parent node. In some embodiments, the first and second indications can be respective DCI format 2_5 messages. In general, the first and second indications can be various explicit or implicit indications, such as discussed above.

In some embodiments, the first and second indications relate to a first resource (e.g., of Soft type) that is configured for both the first and second parent links. In such embodiments, the exemplary method can also include the operations of block 970, where the IAB node can determine that the first resource is available for use by the IAB node only when both the first and second indications indicate that the first resource is available.

In some embodiments, one of the first and second parent nodes serves a master cell group for the IAB node, and the other of the first and second parent node serves a secondary cell group for the IAB node. In some embodiments, the determined multiplexing capability (e.g., in block 910) can include one or more of the following: capability for time-division multiplexing; capability for frequency-division multiple; and capability for spatial multiplexing.

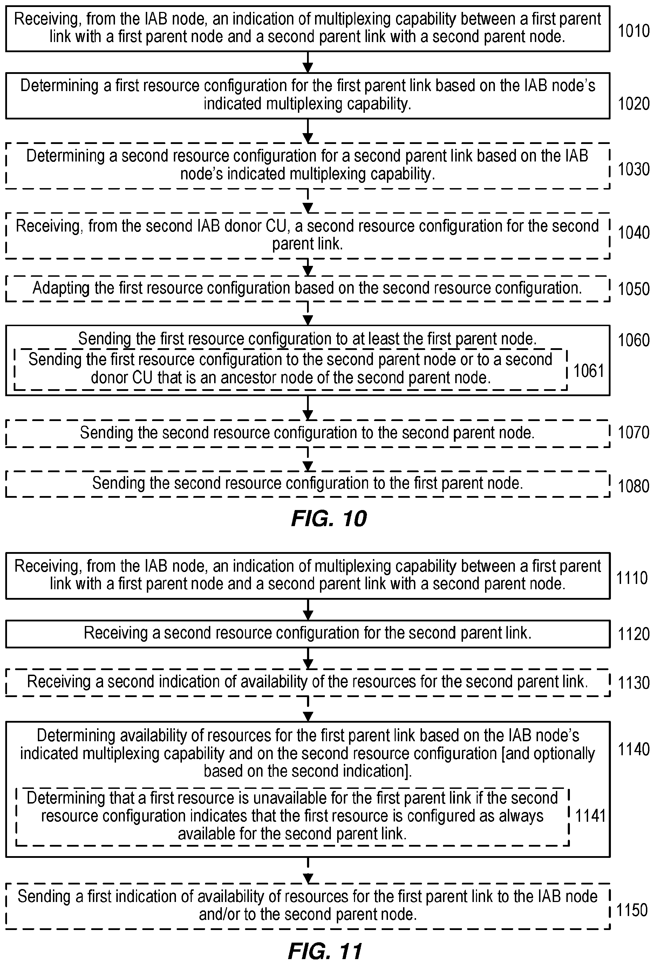

In addition, Figure 10 illustrates an exemplary method (e.g., procedure) for an IAB donor CU configured to communicate with an IAB node in a wireless network via at least an intermediate first parent node of the IAB node, according to various embodiments of the present disclosure. The exemplary method shown in Figure 10 can be performed by an IAB donor CU configured as described elsewhere herein.

The exemplary method can include the operations of block 1010, where the IAB donor CU can receive, from the IAB node, an indication of multiplexing capability between a first parent link with the first parent node and a second parent link with a second parent node of the IAB node. The exemplary method can also include the operations of block 1020, where the IAB donor CU can determine a first resource configuration for the first parent link based on the IAB node's indicated multiplexing capability. The exemplary method can also include the operations of block 1060, where the IAB donor CU can send the first resource configuration to at least the first parent node. For example, the first resource configuration can indicate Hard/Soft/NA, etc. such as described above.

In some embodiments, the IAB donor CU also communicates with the IAB node via the second parent node. In such embodiments, the exemplary method can also include the operations of blocks 1030 and 1070. In block 1030, the IAB donor CU can determine a second resource configuration for a second parent link based on the IAB node's indicated multiplexing capability. In block 1070, the IAB donor CU can send the second resource configuration to the second parent node. For example, the second resource configuration can indicate Hard/Soft/NA, etc. such as described above.

In other embodiments, a second IAB donor CU can be responsible for (e.g., an ancestor of) the second parent node (i.e., instead of the first IAB donor CU). In such embodiments, the exemplary method can also include the operations of blocks 1040-1050. In block 1040, the IAB donor CU can receive, from the second IAB donor CU, a second resource configuration for the second parent link. In block 1050, the IAB donor CU can adapt the first resource configuration based on the second resource configuration. For example, this adaptation can be performed before sending the first resource configuration to the first parent node (e.g., in block 1060).

In some embodiments, sending the first resource configuration to at least the first parent node in block 1060 can include the operations of sub-block 1061, where the IAB donor CU can send the first resource configuration to the second parent node (e.g., when the IAB donor CU is an ancestor node of the second parent node) or to a second donor CU that is an ancestor node of the second parent node. In some embodiments, the exemplary method can also include the operations of block 1080, where the IAB donor CU can send the second resource configuration to the first parent node.

In some embodiments, one of the first and second parent nodes serves a master cell group for the IAB node, and the other of the first and second parent node serves a secondary cell group for the IAB node. In some embodiments, the IAB node's indicated multiplexing capability (e.g., received in block 1010) can include one or more of the following: capability for time-division multiplexing; capability for frequency-division multiple; and capability for spatial multiplexing.

In addition, Figure 11 illustrates an exemplary method (e.g., procedure) for a first parent node of an IAB node in a wireless network, according to various embodiments of the present disclosure. The exemplary method shown in Figure 11 can be performed by an IAB node (e.g., IAB-DU and IAB-MT) configured as described elsewhere herein.

The exemplary method can include the operations of block 1110, where the first parent node can receive, from the IAB node, an indication of the IAB node's multiplexing capability between a first parent link with the first parent node and a second parent link with a second parent node of the IAB node. The exemplary method can also include the operations of block 1120, where the first parent node can receive a second resource configuration for the second parent link. The exemplary method can also include the operations of block 1140, where the first parent node can determine availability of resources for the first parent link based on the IAB node's indicated multiplexing capability and on the second resource configuration. For example, the second resource configuration can indicate Hard/Soft/NA, etc. such as described above.

In some embodiments, the exemplary method can also include the operations of block 1150, where the first parent node can send a first indication of availability of resources for the first parent link to the IAB node and/or to the second parent node.

In some embodiments, the second resource configuration can be received (e.g., in block 1120) from one of the following: the second parent node; the IAB node; or an IAB donor CU that is an ancestor node of at least the first parent node.

In some embodiments, the determining operations of block 1140 can include the operations of sub-block 1141, where the first parent node can determine that a first resource is unavailable for the first parent link if the second resource configuration indicates that the first resource is configured as available for the second parent link (e.g., Hard type).

In some embodiments, the second resource configuration (e.g., received in block 1120) can indicate that availability of resources for the second parent link is indicated by the second parent node (e.g., Soft type). The indication can be explicit or implicit, as discussed above. In such embodiments, the exemplary method can also include the operations of block 1130, where the first parent node can receive a second indication of availability of the resources for the second parent link. In various embodiments, the second indication can be received directly from the second parent node or indirectly via the IAB node or a parent node to both the first and second parent nodes.

In some of these embodiments, the first parent link can be associated with a first resource configuration, which indicates that availability of resources for the first parent link is indicated by the first parent node (e.g., Soft type). The indication can be explicit or implicit, as discussed above. In such embodiments, determining availability of resources for the first parent link (e.g., in block 1140) can be further based on the second indication. An example of these embodiments was discussed above, in which a DU resource was configured as Soft type on both the first and second parent links.

In some embodiments, determining availability of resources for the first parent link in block 1140 can be further based on a prioritization between the first and second parent nodes for scheduling resources configured for both the first and second parent links. In some of these embodiments, the prioritization is one of the following:
- one of the first and second parent nodes that serves an MCG for the IAB node is prioritized (e.g., over the other that serves the SCG for the IAB node); or
- one of the first and second parent nodes that serves an SCG for the IAB node is prioritized (e.g., over the other that serves the MCG for the IAB node).

In some embodiments, the indicated multiplexing capability (e.g., received in block 1110) can include one or more of the following: capability for time-division multiplexing; capability for frequency-division multiple; and capability for spatial multiplexing.

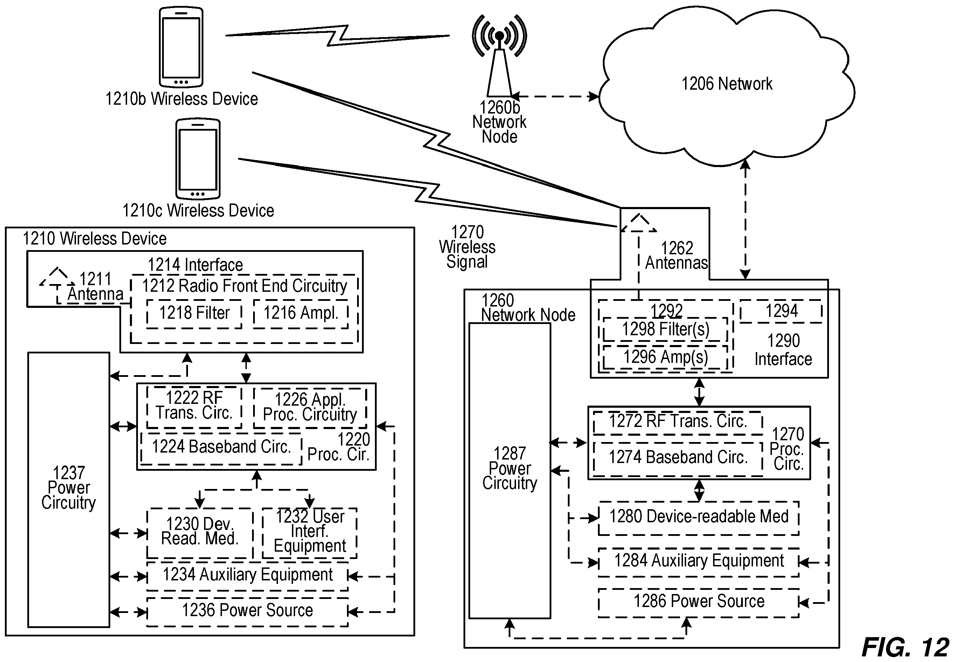

Although the subject matter described herein can be implemented in any appropriate type of system using any suitable components, the embodiments disclosed herein are described in relation to a wireless network, such as the example wireless network illustrated in Figure 12. For simplicity, the wireless network of Figure 12 only depicts network 1206, network nodes 1260 and 1260b, and WDs 1210, 1210b, and 1210c. In practice, a wireless network can further include any additional elements suitable to support communication between wireless devices or between a wireless device and another communication device, such as a landline telephone, a service provider, or any other network node or end device. Of the illustrated components, network node 1260 and wireless device (WD) 1210 are depicted with additional detail. The wireless network can provide communication and other types of services to one or more wireless devices to facilitate the wireless devices' access to and/or use of the services provided by, or via, the wireless network.

The wireless network can comprise and/or interface with any type of communication, telecommunication, data, cellular, and/or radio network or other similar type of system. In some embodiments, the wireless network can be configured to operate according to specific standards or other types of predefined rules or procedures. Thus, particular embodiments of the wireless network can implement communication standards, such as GSM, UMTS, LTE, and/or other suitable 2G, 3G, 4G, or 5G standards; wireless local area network (WLAN) standards, such as the IEEE 802.11 standards; and/or any other appropriate wireless communication standard, such as the WiMax, Bluetooth, Z-Wave and/or ZigBee standards.

Network 1206 can comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 1260 and WD 1210 comprise various components described in more detail below. These components work together in order to provide network node and/or wireless device functionality, such as providing wireless connections in a wireless network. In different embodiments, the wireless network can comprise any number of wired or wireless networks, network nodes, base stations, controllers, wireless devices, relay stations, and/or any other components or systems that can facilitate or participate in the communication of data and/or signals whether via wired or wireless connections.

Examples of network nodes are provided above. Base stations can be categorized based on the amount of coverage they provide (or, stated differently, their transmit power level) and can then also be referred to as femto base stations, pico base stations, micro base stations, or macro base stations. A base station can be a relay node or a relay donor node controlling a relay. A network node can also include one or more (or all) parts of a distributed radio base station such as centralized digital units and/or RRUs, sometimes referred to as Remote Radio Heads (RRHs). Such remote radio units may or may not be integrated with an antenna as an antenna integrated radio. Parts of a distributed radio base station can also be referred to as nodes in a distributed antenna system (DAS).

As another example, a network node can be a virtual network node as described in more detail below. More generally, however, network nodes can represent any suitable device (or group of devices) capable, configured, arranged, and/or operable to enable and/or provide a wireless device with access to the wireless network or to provide some service to a wireless device that has accessed the wireless network.

In Figure 12, network node 1260 includes processing circuitry 1270, device readable medium 1280, interface 1290, auxiliary equipment 1284, power source 1286, power circuitry 1287, and antenna 1262. Although network node 1260 illustrated in the example wireless network of Figure 12 can represent a device that includes the illustrated combination of hardware components, other embodiments can comprise network nodes with different combinations of components. It is to be understood that a network node comprises any suitable combination of hardware and/or software needed to perform the tasks, features, functions and methods and/or procedures disclosed herein. Moreover, while the components of network node 1260 are depicted as single boxes located within a larger box, or nested within multiple boxes, in practice, a network node can comprise multiple different physical components that make up a single illustrated component (e.g., device readable medium 1280 can comprise multiple separate hard drives as well as multiple RAM modules).

Processing circuitry 1270 can comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide various functionality of network node 1260, either alone or in conjunction with other network node 1260 components (e.g., device readable medium 1280). Such functionality can include any of the various wireless features, functions, or benefits discussed herein.

For example, processing circuitry 1270 can execute instructions stored in device readable medium 1280 or in memory within processing circuitry 1270. In some embodiments, processing circuitry 1270 can include a system on a chip (SOC). As a more specific example, instructions (also referred to as a computer program product) stored in medium 1280 can include instructions that, when executed by processing circuitry 1270, can configure network node 1260 to perform operations corresponding to various exemplary methods (e.g., procedures) described herein.

In some embodiments, processing circuitry 1270 can include one or more of radio frequency (RF) transceiver circuitry 1272 and baseband processing circuitry 1274. In some embodiments, radio frequency (RF) transceiver circuitry 1272 and baseband processing circuitry 1274 can be on separate chips (or sets of chips), boards, or units, such as radio units and digital units. In alternative embodiments, part or all of RF transceiver circuitry 1272 and baseband processing circuitry 1274 can be on the same chip or set of chips, boards, or units.

In certain embodiments, some or all of the functionality described herein as being provided by a network node, base station, eNB or other such network device can be performed by processing circuitry 1270 executing instructions stored on device readable medium 1280 or memory within processing circuitry 1270. In alternative embodiments, some or all of the functionality can be provided by processing circuitry 1270 without executing instructions stored on a separate or discrete device readable medium, such as in a hard-wired manner. In any of those embodiments, whether executing instructions stored on a device readable storage medium or not, processing circuitry 1270 can be configured to perform the described functionality. The benefits provided by such functionality are not limited to processing circuitry 1270 alone or to other components of network node 1260 but are enjoyed by network node 1260 as a whole, and/or by end users and the wireless network generally.

Device readable medium 1280 can comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that can be used by processing circuitry 1270. Device readable medium 1280 can store any suitable instructions, data or information, including a computer program, software, an application including one or more of logic, rules, code, tables, *etc.* and/or other instructions capable of being executed by processing circuitry 1270 and, utilized by network node 1260. Device readable medium 1280 can be used to store any calculations made by processing circuitry 1270 and/or any data received via interface 1290. In some embodiments, processing circuitry 1270 and device readable medium 1280 can be considered to be integrated.

Interface 1290 is used in the wired or wireless communication of signaling and/or data between network node 1260, network 1206, and/or WDs 1210. As illustrated, interface 1290 comprises port(s)/terminal(s) 1294 to send and receive data, for example to and from network 1206 over a wired connection. Interface 1290 also includes radio front end circuitry 1292 that can be coupled to, or in certain embodiments a part of, antenna 1262. Radio front end circuitry 1292 comprises filters 1298 and amplifiers 1296. Radio front end circuitry 1292 can be connected to antenna 1262 and processing circuitry 1270. Radio front end circuitry can be configured to condition signals communicated between antenna 1262 and processing circuitry 1270. Radio front end circuitry 1292 can receive digital data that is to be sent out to other network nodes or WDs via a wireless connection. Radio front end circuitry 1292 can convert the digital data into a radio signal having the appropriate channel and bandwidth parameters using a combination of filters 1298 and/or amplifiers 1296. The radio signal can then be transmitted via antenna 1262. Similarly, when receiving data, antenna 1262 can collect radio signals which are then converted into digital data by radio front end circuitry 1292. The digital data can be passed to processing circuitry 1270. In other embodiments, the interface can comprise different components and/or different combinations of components.

In certain alternative embodiments, network node 1260 may not include separate radio front end circuitry 1292, instead, processing circuitry 1270 can comprise radio front end circuitry and can be connected to antenna 1262 without separate radio front end circuitry 1292. Similarly, in some embodiments, all or some of RF transceiver circuitry 1272 can be considered a part of interface 1290. In still other embodiments, interface 1290 can include one or more ports or terminals 1294, radio front end circuitry 1292, and RF transceiver circuitry 1272, as part of a radio unit (not shown), and interface 1290 can communicate with baseband processing circuitry 1274, which is part of a digital unit (not shown).

Antenna 1262 can include one or more antennas, or antenna arrays, configured to send and/or receive wireless signals. Antenna 1262 can be coupled to radio front end circuitry 1290 and can be any type of antenna capable of transmitting and receiving data and/or signals wirelessly. In some embodiments, antenna 1262 can comprise one or more omni-directional, sector or panel antennas operable to transmit/receive radio signals between, for example, 2 GHz and 66 GHz. An omni-directional antenna can be used to transmit/receive radio signals in any direction, a sector antenna can be used to transmit/receive radio signals from devices within a particular area, and a panel antenna can be a line of sight antenna used to transmit/receive radio signals in a relatively straight line. In some instances, the use of more than one antenna can be referred to as MIMO. In certain embodiments, antenna 1262 can be separate from network node 1260 and can be connectable to network node 1260 through an interface or port.

Antenna 1262, interface 1290, and/or processing circuitry 1270 can be configured to perform any receiving operations and/or certain obtaining operations described herein as being performed by a network node. Any information, data and/or signals can be received from a wireless device, another network node and/or any other network equipment. Similarly, antenna 1262, interface 1290, and/or processing circuitry 1270 can be configured to perform any transmitting operations described herein as being performed by a network node. Any information, data and/or signals can be transmitted to a wireless device, another network node and/or any other network equipment.

Power circuitry 1287 can comprise, or be coupled to, power management circuitry and can be configured to supply the components of network node 1260 with power for performing the functionality described herein. Power circuitry 1287 can receive power from power source 1286. Power source 1286 and/or power circuitry 1287 can be configured to provide power to the various components of network node 1260 in a form suitable for the respective components (*e.g*., at a voltage and current level needed for each respective component). Power source 1286 can either be included in, or external to, power circuitry 1287 and/or network node 1260. For example, network node 1260 can be connectable to an external power source (*e.g.,* an electricity outlet) via an input circuitry or interface such as an electrical cable, whereby the external power source supplies power to power circuitry 1287. As a further example, power source 1286 can comprise a source of power in the form of a battery or battery pack which is connected to, or integrated in, power circuitry 1287. The battery can provide backup power should the external power source fail. Other types of power sources, such as photovoltaic devices, can also be used.

Alternative embodiments of network node 1260 can include additional components beyond those shown in Figure 12 that can be responsible for providing certain aspects of the network node's functionality, including any of the functionality described herein and/or any functionality necessary to support the subject matter described herein. For example, network node 1260 can include user interface equipment to allow and/or facilitate input of information into network node 1260 and to allow and/or facilitate output of information from network node 1260. This can allow and/or facilitate a user to perform diagnostic, maintenance, repair, and other administrative functions for network node 1260.

As illustrated, wireless device 1210 includes antenna 1211, interface 1214, processing circuitry 1220, device readable medium 1230, user interface equipment 1232, auxiliary equipment 1234, power source 1236 and power circuitry 1237. WD 1210 can include multiple sets of one or more of the illustrated components for different wireless technologies supported by WD 1210, such as, for example, GSM, WCDMA, LTE, NR, WiFi, WiMAX, or Bluetooth wireless technologies, just to mention a few. These wireless technologies can be integrated into the same or different chips or set of chips as other components within WD 1210.

Antenna 1211 can include one or more antennas or antenna arrays, configured to send and/or receive wireless signals, and is connected to interface 1214. In certain alternative embodiments, antenna 1211 can be separate from WD 1210 and be connectable to WD 1210 through an interface or port. Antenna 1211, interface 1214, and/or processing circuitry 1220 can be configured to perform any receiving or transmitting operations described herein as being performed by a WD. Any information, data and/or signals can be received from a network node and/or another WD. In some embodiments, radio front end circuitry and/or antenna 1211 can be considered an interface.

As illustrated, interface 1214 comprises radio front end circuitry 1212 and antenna 1211. Radio front end circuitry 1212 comprise one or more filters 1218 and amplifiers 1216. Radio front end circuitry 1214 is connected to antenna 1211 and processing circuitry 1220 and can be configured to condition signals communicated between antenna 1211 and processing circuitry 1220. Radio front end circuitry 1212 can be coupled to or a part of antenna 1211. In some embodiments, WD 1210 may not include separate radio front end circuitry 1212; rather, processing circuitry 1220 can comprise radio front end circuitry and can be connected to antenna 1211. Similarly, in some embodiments, some or all of RF transceiver circuitry 1222 can be considered a part of interface 1214. Radio front end circuitry 1212 can receive digital data that is to be sent out to other network nodes or WDs via a wireless connection. Radio front end circuitry 1212 can convert the digital data into a radio signal having the appropriate channel and bandwidth parameters using a combination of filters 1218 and/or amplifiers 1216. The radio signal can then be transmitted via antenna 1211. Similarly, when receiving data, antenna 1211 can collect radio signals which are then converted into digital data by radio front end circuitry 1212. The digital data can be passed to processing circuitry 1220. In other embodiments, the interface can comprise different components and/or different combinations of components.

Processing circuitry 1220 can comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide WD 1210 functionality either alone or in combination with other WD 1210 components, such as device readable medium 1230. Such functionality can include any of the various wireless features or benefits discussed herein.

For example, processing circuitry 1220 can execute instructions stored in device readable medium 1230 or in memory within processing circuitry 1220 to provide the functionality disclosed herein. More specifically, instructions (also referred to as a computer program product) stored in medium 1230 can include instructions that, when executed by processor 1220, can configure wireless device 1210 to perform operations corresponding to various exemplary methods (e.g., procedures) described herein.

As illustrated, processing circuitry 1220 includes one or more of RF transceiver circuitry 1222, baseband processing circuitry 1224, and application processing circuitry 1226. In other embodiments, the processing circuitry can comprise different components and/or different combinations of components. In certain embodiments processing circuitry 1220 of WD 1210 can comprise a SOC. In some embodiments, RF transceiver circuitry 1222, baseband processing circuitry 1224, and application processing circuitry 1226 can be on separate chips or sets of chips. In alternative embodiments, part or all of baseband processing circuitry 1224 and application processing circuitry 1226 can be combined into one chip or set of chips, and RF transceiver circuitry 1222 can be on a separate chip or set of chips. In still alternative embodiments, part or all of RF transceiver circuitry 1222 and baseband processing circuitry 1224 can be on the same chip or set of chips, and application processing circuitry 1226 can be on a separate chip or set of chips. In yet other alternative embodiments, part or all of RF transceiver circuitry 1222, baseband processing circuitry 1224, and application processing circuitry 1226 can be combined in the same chip or set of chips. In some embodiments, RF transceiver circuitry 1222 can be a part of interface 1214. RF transceiver circuitry 1222 can condition RF signals for processing circuitry 1220.

In certain embodiments, some or all of the functionality described herein as being performed by a WD can be provided by processing circuitry 1220 executing instructions stored on device readable medium 1230, which in certain embodiments can be a computer-readable storage medium. In alternative embodiments, some or all of the functionality can be provided by processing circuitry 1220 without executing instructions stored on a separate or discrete device readable storage medium, such as in a hard-wired manner. In any of those particular embodiments, whether executing instructions stored on a device readable storage medium or not, processing circuitry 1220 can be configured to perform the described functionality. The benefits provided by such functionality are not limited to processing circuitry 1220 alone or to other components of WD 1210, but are enjoyed by WD 1210 as a whole, and/or by end users and the wireless network generally.

Device readable medium 1230 can be operable to store a computer program, software, an application including one or more of logic, rules, code, tables, *etc.* and/or other instructions capable of being executed by processing circuitry 1220. Device readable medium 1230 can include computer memory (*e.g*., Random Access Memory (RAM) or Read Only Memory (ROM)), mass storage media (*e.g.,* a hard disk), removable storage media (*e.g.,* a Compact Disk (CD) or a Digital Video Disk (DVD)), and/or any other volatile or non-volatile, non-transitory device readable and/or computer executable memory devices that store information, data, and/or instructions that can be used by processing circuitry 1220. In some embodiments, processing circuitry 1220 and device readable medium 1230 can be considered to be integrated.

User interface equipment 1232 can include components that allow and/or facilitate a human user to interact with WD 1210. Such interaction can be of many forms, such as visual, audial, tactile, *etc.* User interface equipment 1232 can be operable to produce output to the user and to allow and/or facilitate the user to provide input to WD 1210. The type of interaction can vary depending on the type of user interface equipment 1232 installed in WD 1210. For example, if WD 1210 is a smart phone, the interaction can be via a touch screen; if WD 1210 is a smart meter, the interaction can be through a screen that provides usage *(e.g.,* the number of gallons used) or a speaker that provides an audible alert *(e.g.,* if smoke is detected).

Auxiliary equipment 1234 is operable to provide more specific functionality which may not be generally performed by WDs. This can comprise specialized sensors for doing measurements for various purposes, interfaces for additional types of communication such as wired communications *etc.* The inclusion and type of components of auxiliary equipment 1234 can vary depending on the embodiment and/or scenario.

Power source 1236 can, in some embodiments, be in the form of a battery or battery pack. Other types of power sources, such as an external power source *(e.g.,* an electricity outlet), photovoltaic devices or power cells, can also be used. WD 1210 can further comprise power circuitry 1237 for delivering power from power source 1236 to the various parts of WD 1210 which need power from power source 1236 to carry out any functionality described or indicated herein. Power circuitry 1237 can in certain embodiments comprise power management circuitry. Power circuitry 1237 can additionally or alternatively be operable to receive power from an external power source; in which case WD 1210 can be connectable to the external power source (such as an electricity outlet) via input circuitry or an interface such as an electrical power cable. Power circuitry 1237 can also in certain embodiments be operable to deliver power from an external power source to power source 1236. This can be, for example, for the charging of power source 1236. Power circuitry 1237 can perform any converting or other modification to the power from power source 1236 to make it suitable for supply to the respective components of WD 1210.

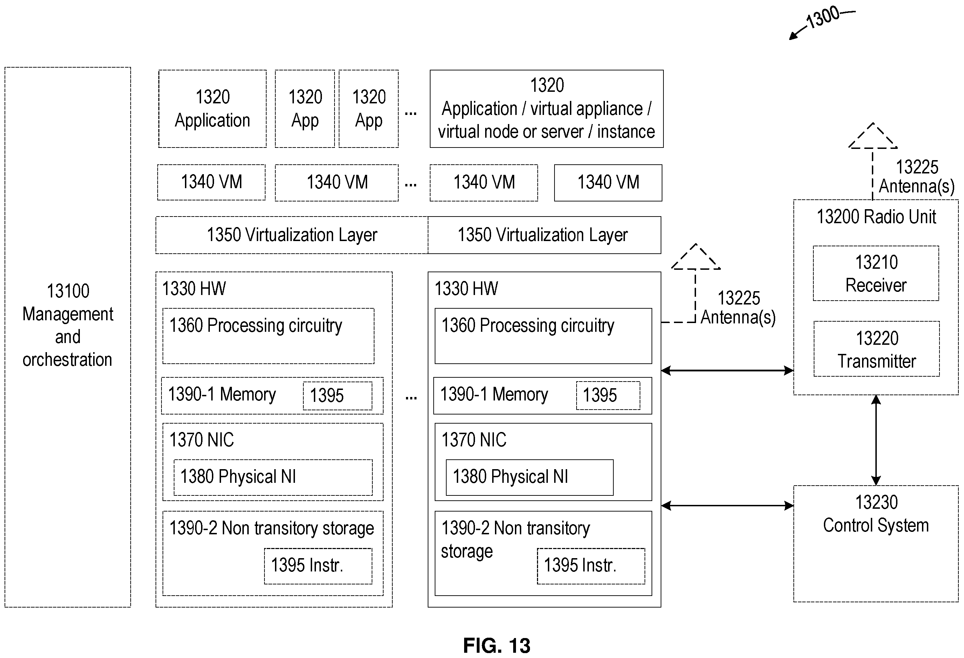

Figure 13 is a schematic block diagram illustrating a virtualization environment 1300 in which functions implemented by some embodiments can be virtualized. In the present context, virtualizing means creating virtual versions of apparatuses or devices which can include virtualizing hardware platforms, storage devices and networking resources. As used herein, virtualization can be applied to a node *(e.g.,* a virtualized base station or a virtualized radio access node) or to a device *(e.g.,* a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein can be implemented as virtual components executed by one or more virtual machines implemented in one or more virtual environments 1300 hosted by one or more of hardware nodes 1330. Further, in embodiments in which the virtual node is not a radio access node or does not require radio connectivity (e.g., a core network node), then the network node can be entirely virtualized.

The functions can be implemented by one or more applications 1320 (which can alternatively be called software instances, virtual appliances, network functions, virtual nodes, virtual network functions, *etc.*) operative to implement some of the features, functions, and/or benefits of some of the embodiments disclosed herein. Applications 1320 are run in virtualization environment 1300 which provides hardware 1330 comprising processing circuitry 1360 and memory 1390. Memory 1390 contains instructions 1395 executable by processing circuitry 1360 whereby application 1320 is operative to provide one or more of the features, benefits, and/or functions disclosed herein.

Virtualization environment 1300 can include general-purpose or special-purpose network hardware devices (or nodes) 1330 comprising a set of one or more processors or processing circuitry 1360, which can be commercial off-the-shelf (COTS) processors, dedicated Application Specific Integrated Circuits (ASICs), or any other type of processing circuitry including digital or analog hardware components or special purpose processors. Each hardware device can comprise memory 1390-1 which can be non-persistent memory for temporarily storing instructions 1395 or software executed by processing circuitry 1360. For example, instructions 1395 can include program instructions (also referred to as a computer program product) that, when executed by processing circuitry 1360, can configure hardware node 1320 to perform operations corresponding to various exemplary methods (e.g., procedures) described herein. Such operations can also be attributed to virtual node(s) 1320 that is/are hosted by hardware node 1330.

Each hardware device can comprise one or more network interface controllers (NICs) 1370, also known as network interface cards, which include physical network interface 1380. Each hardware device can also include non-transitory, persistent, machine-readable storage media 1390-2 having stored therein software 1395 and/or instructions executable by processing circuitry 1360. Software 1395 can include any type of software including software for instantiating one or more virtualization layers 1350 (also referred to as hypervisors), software to execute virtual machines 1340 as well as software allowing it to execute functions, features and/or benefits described in relation with some embodiments described herein.

Virtual machines 1340, comprise virtual processing, virtual memory, virtual networking or interface and virtual storage, and can be run by a corresponding virtualization layer 1350 or hypervisor. Different embodiments of the instance of virtual appliance 1320 can be implemented on one or more of virtual machines 1340, and the implementations can be made in different ways.

During operation, processing circuitry 1360 executes software 1395 to instantiate the hypervisor or virtualization layer 1350, which can sometimes be referred to as a virtual machine monitor (VMM). Virtualization layer 1350 can present a virtual operating platform that appears like networking hardware to virtual machine 1340.

As shown in Figure 13, hardware 1330 can be a standalone network node with generic or specific components. Hardware 1330 can comprise antenna 13225 and can implement some functions via virtualization. Alternatively, hardware 1330 can be part of a larger cluster of hardware (e.g., such as in a data center or customer premise equipment (CPE)) where many hardware nodes work together and are managed via management and orchestration (MANO) 13100, which, among others, oversees lifecycle management of applications 1320.

Virtualization of the hardware is in some contexts referred to as network function virtualization (NFV). NFV can be used to consolidate many network equipment types onto industry standard high volume server hardware, physical switches, and physical storage, which can be located in data centers, and customer premise equipment.

In the context of NFV, virtual machine 1340 can be a software implementation of a physical machine that runs programs as if they were executing on a physical, non-virtualized machine. Each of virtual machines 1340, and that part of hardware 1330 that executes that virtual machine, be it hardware dedicated to that virtual machine and/or hardware shared by that virtual machine with others of the virtual machines 1340, forms a separate virtual network elements (VNE).

Still in the context of NFV, Virtual Network Function (VNF) is responsible for handling specific network functions that run in one or more virtual machines 1340 on top of hardware networking infrastructure 1330 and corresponds to application 1320 in Figure 13.

In some embodiments, one or more radio units 13200 that each include one or more transmitters 13220 and one or more receivers 13210 can be coupled to one or more antennas 13225. Radio units 13200 can communicate directly with hardware nodes 1330 via one or more appropriate network interfaces and can be used in combination with the virtual components to provide a virtual node with radio capabilities, such as a radio access node or a base station. Nodes arranged in this manner can also communicate with one or more UEs, such as described elsewhere herein.

In some embodiments, some signaling can be performed via control system 13230, which can alternatively be used for communication between the hardware nodes 1330 and radio units 13200.

The foregoing merely illustrates the principles of the disclosure. Various modifications and alterations to the described embodiments will be apparent to those skilled in the art in view of the teachings herein. It will thus be appreciated that those skilled in the art will be able to devise numerous systems, arrangements, and procedures that, although not explicitly shown or described herein, fall within the scope of the invention as claimed. Various exemplary embodiments can be used together with one another, as well as interchangeably therewith, as should be understood by those having ordinary skill in the art.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, *etc.* Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

As described herein, device and/or apparatus can be represented by a semiconductor chip, a chipset, or a (hardware) module comprising such chip or chipset; this, however, does not exclude the possibility that a functionality of a device or apparatus, instead of being hardware implemented, be implemented as a software module such as a computer program or a computer program product comprising executable software code portions for execution or being run on a processor. Furthermore, functionality of a device or apparatus can be implemented by any combination of hardware and software. A device or apparatus can also be regarded as an assembly of multiple devices and/or apparatuses, whether functionally in cooperation with or independently of each other. Moreover, devices and apparatuses can be implemented in a distributed fashion throughout a system, so long as the functionality of the device or apparatus is preserved. Such and similar principles are considered as known to a skilled person.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

In addition, certain terms used in the present disclosure, including the specification and drawings, can be used synonymously in certain instances (e.g., "data" and "information"). It should be understood, that although these terms (and/or other terms that can be synonymous to one another) can be used synonymously herein, there can be instances when such words can be intended to not be used synonymously.

## Claims

1. A method for an integrated access backhaul, IAB, node configured to communicate with first and second parent nodes in a wireless network, the method comprising:
determining (910) the IAB node's multiplexing capability between a first parent link with the first parent node and a second parent link with the second parent node;
sending (920) an indication of the multiplexing capability to one or more ancestor nodes in the wireless network;
receiving (930), from the first parent node, a first indication of availability of resources for the first parent link;
receiving (940), from the second parent node, a second indication of availability of resources for the second parent link, wherein the first and second indications relate to a first resource that is configured for both the first and second parent links; and
determining (970) that the first resource is available for use by the IAB node only when both the first and second indications indicate that the first resource is available.

2. The method of claim 1, wherein:
- the one or more ancestor nodes include any of the following: the first and second parent nodes; and an IAB donor centralized unit, CU, that is an ancestor node of at least one of the first and second parent nodes; or
- the method further comprises one or more of the following: forwarding (950) the first indication to the second parent node; and forwarding (960) the second indication to the first parent node, wherein, optionally, the first and second indications are respective downlink control information, DCI, format 2_5 messages.

3. The method of claim 1 or 2, wherein:
- one of the first and second parent nodes serves a master cell group for the IAB node, and the other of the first and second parent node serves a secondary cell group for the IAB node; and/or
- the determined multiplexing capability includes one or more of the following: capability for time-division multiplexing, capability for frequency-division multiplexing, and capability for spatial multiplexing.

4. A method for an integrated access backhaul, IAB, donor centralized unit, CU, configured to communicate with an IAB node in a wireless network via at least an intermediate first parent node of the IAB node, the method comprising:
receiving (1010), from the IAB node, an indication of the IAB node's multiplexing capability between a first parent link with the first parent node and a second parent link with a second parent node of the IAB node;
determining (1020) a first resource configuration for the first parent link based on the IAB node's indicated multiplexing capability; and
sending (1060) the first resource configuration to at least the first parent node.

5. The method of claim 4, wherein:
- the IAB donor CU also communicates with the IAB node via the second parent node; and the method further comprises: determining (1030) a second resource configuration for a second parent link based on the IAB node's indicated multiplexing capability; and sending (1070) the second resource configuration to the second parent node; or
- the method further comprises receiving (1040), from a second IAB donor CU that is ancestor node of the second parent node, a second resource configuration for the second parent link; and adapting (1050) the first resource configuration based on the second resource configuration.

6. The method of claim 5, wherein:
- sending (1060) the first resource configuration to at least the first parent node comprises sending (1061) the first resource configuration to the second parent node or to a second donor CU that is an ancestor node of the second parent node; and/or
- the method further comprises sending (1080) the second resource configuration to the first parent node.

7. The method of any of claims 4 to 6, wherein:
- one of the first and second parent nodes serves a master cell group for the IAB node, and the other of the first and second parent node serves a secondary cell group for the IAB node; and/or
- the IAB node's indicated multiplexing capability includes one or more of the following: capability for time-division multiplexing, capability for frequency-division multiplexing, and capability for spatial multiplexing.

8. A method for a first parent node of an integrated access backhaul, IAB, node in a wireless network, the method comprising:
receiving (1110), from the IAB node, an indication of the IAB node's multiplexing capability between a first parent link with the first parent node and a second parent link with a second parent node of the IAB node;
receiving (1120) a second resource configuration for the second parent link; and
determining (1140) availability of resources for the first parent link based on the IAB node's indicated multiplexing capability and on the second resource configuration.

9. The method of claim 8, wherein:
- the method further comprises sending (1150) a first indication of availability of resources for the first parent link to one or more of the following: the IAB node, and the second parent node; and/or
- the second resource configuration is received from one of the following: the second parent node, the IAB node, or an IAB donor centralized unit, CU, that is an ancestor node of at least the first parent node; and/or
- determining (1140) availability of resources for the first parent link comprises determining (1141) that a first resource is unavailable for the first parent link when the second resource configuration indicates that the first resource is configured as available for the second parent link; and/or
- determining (1140) availability of resources for the first parent link is further based on a prioritization between the first and second parent nodes for scheduling resources configured for both the first and second parent links; and/or
- the prioritization is one of the following applies: one of the first and second parent nodes that serves a master cell group for the IAB node is prioritized; or one of the first and second parent nodes that serves a secondary cell group for the IAB node is prioritized; and/or
- the indicated multiplexing capability includes one or more of the following: capability for time-division multiplexing, capability for frequency-division multiplexing, and capability for spatial multiplexing.

10. The method of claim 8 or 9, wherein:
the second resource configuration indicates that availability of resources for the second parent link is indicated by the second parent node; and
the method further comprises receiving (1130) a second indication of availability of the resources for the second parent link.

11. The method of claim 10, wherein:
- the second indication is received from one of the following: the IAB node, the second parent node, or a parent node to both the first and second parent nodes; and/or
- the first parent link is associated with a first resource configuration, which indicates that availability of resources for the first parent link is indicated by the first parent node; and determining (1140) availability of resources for the first parent link is further based on the second indication.

12. An integrated access backhaul, IAB, node (711, 712, 724) configured to communicate with first and second parent nodes (721, 722, 723, 733, 734) in a wireless network (199, 399, 700), the IAB node comprising:
communication interface circuitry (1214, 1290) and processing circuitry (1220, 1270) configured as a mobile terminal, IAB-MT, and a distributed unit, IAB-DU,
wherein the processing circuitry and communication interface circuitry are further configured to to perform operations corresponding to the method of any one of claims 1 to 3.

13. An integrated access backhaul, IAB, donor centralized unit, CU (741, 751) configured to communicate with an IAB node (711, 712, 724) in a wireless network (199, 399, 700) via at least an intermediate first parent node (721, 722, 723, 733, 734) of the IAB node, the IAB donor CU comprising:
communication interface circuitry (1290, 1370) configured to communicate with at least the first parent node and the IAB node; and
processing circuitry (1270, 1360) operably coupled to the communication interface circuitry, whereby the processing circuitry and the communication interface circuitry are configured to perform operations corresponding to the method of any one of claims 4 to 7.

14. A first parent node (721, 722, 723, 733, 734) of an integrated access backhaul, IAB, node (711, 712, 724) in a wireless network (199, 399, 700), the first parent node comprising:
communication interface circuitry (1214, 1290) and processing circuitry (1220, 1270) configured as a mobile terminal, IAB-MT, and a distributed unit, IAB-DU,
wherein the processing circuitry and communication interface circuitry are further configured to perform operations corresponding to the method of any one of claims 8 to 11.

15. A non-transitory, computer-readable medium (1230, 1280, 1280, 1390) storing computer-executable instructions that:
- when executed by processing circuitry (1220, 1270) of an integrated access backhaul, IAB, node (711, 712, 724) configured to communicate with first and second parent nodes (721, 722, 723, 733, 734) in a wireless network (199, 399, 700), configure the IAB node to perform operations corresponding to the method of any one of claims 1 to 3; or
- when executed by processing circuitry (1270, 1360) of an integrated access backhaul, IAB, donor centralized unit, CU (741, 751) configured to communicate with an IAB node (711, 712, 724) in a wireless network (199, 399, 700) via at least an intermediate first parent node (721, 722, 723, 733, 734), configure the IAB donor CU to perform operations corresponding to the method of any one of claims 4 to 7; or
- when executed by processing circuitry (1220, 1270) of a first parent node (721, 722, 723, 733, 734) of an integrated access backhaul, IAB, node (711, 712, 724) in a wireless network (199, 399, 700), configure the first parent node to perform operations corresponding to the method of any one of claims 8 to 11.

## Patentansprüche

1. Verfahren für einen Integrated-Access-Backhaul-Knoten, IAB-Knoten, der zum Kommunizieren mit einem ersten und einem zweiten übergeordneten Knoten in einem Drahtlosnetzwerk konfiguriert ist, wobei das Verfahren umfasst:
Bestimmen (910) der Multiplexfähigkeit des IAB-Knotens zwischen einer ersten übergeordneten Verbindung mit dem ersten übergeordneten Knoten und einer zweiten übergeordneten Verbindung mit dem zweiten übergeordneten Knoten;
Senden (920) einer Angabe der Multiplexfähigkeit an einen oder mehrere Vorgängerknoten im Drahtlosnetzwerk;
Empfangen (930) einer ersten Ressourcenverfügbarkeitsangabe vom ersten übergeordneten Knoten für die erste übergeordnete Verbindung;
Empfangen (940) einer zweiten Ressourcenverfügbarkeitsangabe vom zweiten übergeordneten Knoten für die zweite übergeordnete Verbindung, wobei sich die erste und die zweite Angabe auf eine erste Ressource beziehen, die sowohl für die erste als auch die zweite übergeordnete Verbindung konfiguriert ist; und
Bestimmen (970), dass die erste Ressource zur Verwendung durch den IAB-Knoten nur dann verfügbar ist, wenn sowohl die erste als auch die zweite Angabe angeben, dass die erste Ressource verfügbar ist.

2. Verfahren nach Anspruch 1, wobei:
- der eine oder die mehreren Vorgängerknoten einen von folgenden umfassen: den ersten oder den zweiten übergeordneten Knoten; und eine zentrale IAB-Gebereinheit, CU, bei der es sich um einen Vorgängerknoten von mindestens einem des ersten und des zweiten übergeordneten Knotens handelt; oder
- das Verfahren ferner eines oder mehreres von Folgendem umfasst: Weiterleiten (950) der ersten Angabe an den zweiten übergeordneten Knoten; und Weiterleiten (960) der zweiten Angabe an den ersten übergeordneten Knoten, wobei optional die erste und die zweite Angabe jeweilige Nachrichten mit Downlink-Steuerinformationen, DCI, im Format 2_5 sind.

3. Verfahren nach Anspruch 1 oder 2, wobei:
- einer des ersten und des zweiten übergeordneten Knotens eine Master-Zellengruppe für den IAB-Knoten bedient und der andere des ersten und des zweiten übergeordneten Knotens eine sekundäre Zellengruppe für den IAB-Knoten bedient; und/oder
- die bestimmte Multiplexfähigkeit eine oder mehrere von folgenden umfasst: Zeitmultiplexfähigkeit, Frequenzmultiplexfähigkeit und Raummultiplexfähigkeit.

4. Verfahren für eine zentrale Integrated-Access-Backhaul-Gebereinheit, IAB-Geber-CU, die zum Kommunizieren mit einem IAB-Knoten in einem Drahtlosnetzwerk über mindestens einen ersten übergeordneten Zwischenknoten des IAB-Knotens konfiguriert ist, wobei das Verfahren umfasst:
Empfangen (1010) einer Angabe der Multiplexfähigkeit des IAB-Knotens zwischen einer ersten übergeordneten Verbindung mit dem ersten übergeordneten Knoten und einer zweiten übergeordneten Verbindung mit einem zweiten übergeordneten Knoten vom IAB-Knoten;
Bestimmen (1020) einer ersten Ressourcenkonfiguration für die erste übergeordnete Verbindung basierend auf der angegebenen Multiplexfähigkeit des lAB-Knotens; und
Senden (1060) der ersten Ressourcenkonfiguration zumindest an den ersten übergeordneten Knoten.

5. Verfahren nach Anspruch 4, wobei:
- die IAB-Geber-CU mit dem IAB-Knoten außerdem über den zweiten übergeordneten Knoten kommuniziert; und das Verfahren ferner umfasst: Bestimmen (1030) einer zweiten Ressourcenkonfiguration für eine zweite übergeordnete Verbindung basierend auf der angegebenen Multiplexfähigkeit des IAB-Knotens und Senden (1070) der zweiten Ressourcenkonfiguration an den zweiten übergeordneten Knoten; oder
- das Verfahren ein Empfangen (1040) einer zweiten Ressourcenkonfiguration für die zweite übergeordnete Verbindung von einer zweiten IAB-Geber-CU, bei der es sich um einen Vorgängerknoten des zweiten übergeordneten Knoten handelt, und Anpassen (1050) der ersten Ressourcenkonfiguration basierend auf der zweiten Ressourcenkonfiguration umfasst.

6. Verfahren nach Anspruch 5, wobei:
- das Senden (1060) der ersten Ressourcenkonfiguration zumindest an den ersten übergeordneten Knoten ein Senden (1061) der ersten Ressourcenkonfiguration an den zweiten übergeordneten Knoten oder an eine zweite Geber-CU umfasst, bei der es sich um einen Vorgängerknoten des zweiten übergeordneten Knotens handelt; und/oder
- das Verfahren ferner ein Senden (1080) der zweiten Ressourcenkonfiguration an den ersten übergeordneten Knoten umfasst.

7. Verfahren nach einem der Ansprüche 4 bis 6, wobei:
- einer des ersten und des zweiten übergeordneten Knotens eine Master-Zellengruppe für den IAB-Knoten bedient und der andere des ersten und des zweiten übergeordneten Knotens eine sekundäre Zellengruppe für den IAB-Knoten bedient; und/oder
- die angegebene Multiplexfähigkeit eine oder mehrere von folgenden umfasst: Zeitmultiplexfähigkeit, Frequenzmultiplexfähigkeit und Raummultiplexfähigkeit.

8. Verfahren für einen ersten übergeordneten Knoten eines Integrated-Access-Backhaul-Knotens, lAB-Knotens, in einem Drahtlosnetzwerk, wobei das Verfahren umfasst:
Empfangen (1110) einer Angabe der Multiplexfähigkeit des lAB-Knotens zwischen einer ersten übergeordneten Verbindung mit dem ersten übergeordneten Knoten und einer zweiten übergeordneten Verbindung mit einem zweiten übergeordneten Knoten des IAB-Knotens vom IAB-Knoten;
Empfangen (1120) einer zweiten Ressourcenkonfiguration für die zweite übergeordnete Verbindung; und
Bestimmen (1140) der Verfügbarkeit von Ressourcen für die erste übergeordnete Verbindung basierend auf der angegebenen Multiplexfähigkeit des IAB-Knotens und auf der zweiten Ressourcenkonfiguration.

9. Verfahren nach Anspruch 8, wobei:
- das Verfahren ferner ein Senden (1150) einer ersten Ressourcenverfügbarkeitsangabe für die erste übergeordnete Verbindung an einen oder mehreren von Folgenden umfasst: den lAB-Knoten und den zweiten übergeordneten Knoten; und/oder
- die zweite Ressourcenkonfiguration von einem oder mehreren von Folgenden empfangen wird: dem zweiten übergeordneten Knoten, dem lAB-Knoten und einer zentralen IAB-Gebereinheit, IAB-Geber-CU, bei der es sich um einen Vorgängerknoten zumindest des ersten übergeordneten Knotens handelt;
- das Bestimmen (1140) der Verfügbarkeit von Ressourcen für die erste übergeordnete Verbindung ein Bestimmen (1141) umfasst, dass eine erste Ressource für die erste übergeordnete Verbindung nicht verfügbar ist, wenn die zweite Ressourcenkonfiguration angibt, dass die erste Ressource als für die zweite übergeordnete Verbindung verfügbar konfiguriert ist; und/oder
- das Bestimmen (1140) der Verfügbarkeit von Ressourcen für die erste übergeordnete Verbindung auf einer Priorisierung zwischen dem ersten und dem zweiten übergeordneten Knoten zum Disponieren von Ressourcen basiert, die sowohl für die erste als auch die zweite übergeordnete Verbindung konfiguriert sind; und/oder
- für die Priorisierung eines von Folgendem gilt: einer des ersten und des zweiten übergeordneten Knotens, der eine Master-Zellengruppe für den IAB-Knoten bedient, wird priorisiert; oder einer des ersten und des zweiten übergeordneten Knotens, der eine sekundäre Zellengruppe für den IAB-Knoten bedient, wird priorisiert; und/oder
- die angegebene Multiplexfähigkeit eine oder mehrere von folgenden umfasst: Zeitmultiplexfähigkeit, Frequenzmultiplexfähigkeit und Raummultiplexfähigkeit.

10. Verfahren nach Anspruch 8 oder 9, wobei:
die zweite Ressourcenkonfiguration angibt, dass die Verfügbarkeit von Ressourcen für die zweite übergeordnete Verbindung durch den zweiten übergeordneten Knoten angegeben wird; und
das Verfahren ferner ein Empfangen (1130) einer zweiten Angabe der Verfügbarkeit der Ressourcen für die zweite übergeordnete Verbindung umfasst.

11. Verfahren nach Anspruch 10, wobei:
- die zweite Angabe von einem von Folgenden empfangen wird: dem lAB-Knoten, dem zweiten übergeordneten Knoten oder einem übergeordneten Knoten sowohl des ersten als auch des zweiten übergeordneten Knotens; und/oder
- der ersten übergeordneten Verbindung eine erste Ressourcenkonfiguration zugeordnet wird, die angibt, das die Verfügbarkeit von Ressourcen für die erste übergeordnete Verbindung durch den ersten übergeordneten Knoten angegeben wird; und das Bestimmen (1140) der Verfügbarkeit von Ressourcen für die erste übergeordnete Verbindung ferner auf der zweiten Angabe basiert.

12. Integrated-Access-Backhaul-Knoten, IAB-Knoten, (711, 712, 724), der zum Kommunizieren mit einem ersten und einem zweiten übergeordneten Knoten (721, 722, 723, 733, 734) in einem Drahtlosnetzwerk (199, 399, 700) konfiguriert ist, wobei der IAB-Knoten umfasst:
Kommunikationsschnittstellenschaltungsanordnung (1214, 1290) und Verarbeitungsschaltungsanordnung (1220, 1270), konfiguriert als ein mobiles Endgerät, IAB-MT, und eine verteilte Einheit, IAB-DU,
wobei die Verarbeitungsschaltungsanordnung und die Kommunikationsschnittstellenschaltungsanordnung ferner zum Durchführen von Operationen konfiguriert sind, die dem Verfahren nach einem der Ansprüche 1 bis 3 entsprechen.

13. Zentrale Integrated-Access-Backhaul-Gebereinheit, IAB-Geber-CU, (741, 751), die zum Kommunizieren mit einem IAB-Knoten (711, 712, 724) in einem Drahtlosnetzwerk (199, 399, 700) über mindestens einen ersten übergeordneten Zwischenknoten (721, 722, 723, 733, 734) des lAB-Knotens konfiguriert ist, wobei die IAB-Geber-CU umfasst:
Kommunikationsschnittstellenschaltungsanordnung (1290, 1370), die zumindest zum Kommunizieren mit dem ersten übergeordneten Knoten und dem IAB-Knoten konfiguriert ist; und
Verarbeitungsschaltungsanordnung (1270, 1360), die mit der Schnittstellenschaltungsanordnung funktionell gekoppelt ist, wobei die Verarbeitungsschaltungsanordnung und die Schnittstellenschaltungsanordnung zum Durchführen von Operationen konfiguriert sind, die dem Verfahren nach einem der Ansprüche 4 bis 7 entsprechen.

14. Erster übergeordneter Knoten (721, 722, 723, 733, 734) eines Integrated-Access-Backhaul-Knotens, IAB-Knotens, (711, 712, 724) in einem Drahtlosnetzwerk (199, 399, 700), wobei der erste übergeordnete Knoten umfasst:
Kommunikationsschnittstellenschaltungsanordnung (1214, 1290) und Verarbeitungsschaltungsanordnung (1220, 1270), konfiguriert als ein mobiles Endgerät, IAB-MT, und eine verteilte Einheit, IAB-DU,
wobei die Verarbeitungsschaltungsanordnung und die Kommunikationsschnittstellenschaltungsanordnung ferner zum Durchführen von Operationen konfiguriert sind, die dem Verfahren nach einem der Ansprüche 8 bis 11 entsprechen.

15. Nicht-transitorisches, computerlesbares Medium (1230, 1280, 1280, 1390), das computerausführbare Anweisungen speichert, die:
- bei Ausführung durch Verarbeitungsschaltungsanordnung (1220, 1270) eines Integrated-Access-Backhaul-Knotens, IAB-Knotens, (711, 712, 724), der zum Kommunizieren mit einem ersten und einem zweiten übergeordneten Knoten (721, 722, 723, 733, 734) in einem Drahtlosnetzwerk (199, 399, 700) konfiguriert ist, den IAB-Knoten zum Durchführen von Operationen konfigurieren, die dem Verfahren nach einem der Ansprüche 1 bis 3 entsprechen; oder
- bei Ausführung durch Verarbeitungsschaltungsanordnung (1270, 1360) einer zentralen Integrated-Access-Backhaul-Gebereinheit, IAB-Geber-CU, (741, 751), die zum Kommunizieren mit einem IAB-Knoten (711, 712, 724) in einem Drahtlosnetzwerk (199, 399, 700) über mindestens einen ersten übergeordneten Zwischenknoten (721, 722, 723, 733, 734) konfiguriert ist, die IAB-Geber-CU zum Durchführen von Operationen konfigurieren, die dem Verfahren nach einem der Ansprüche 4 bis 7 entsprechen; oder
- bei Ausführung durch Verarbeitungsschaltungsanordnung (1220, 1270) eines ersten übergeordneten Knotens (721, 722, 723, 733, 734) eines Integrated-Access-Backhaul-Knotens, IAB-Knotens, (711, 712, 724) in einem Drahtlosnetzwerk (199, 399, 700) den ersten übergeordneten Knoten zum Durchführen von Operationen konfigurieren, die dem Verfahren nach einem der Ansprüche 8 bis 11 entsprechen.

## Revendications

1. Procédé pour un noeud de liaison terrestre à accès intégré, IAB, configuré pour communiquer avec des premier et deuxième noeuds parents dans un réseau sans fil, le procédé comprenant :
la détermination (910) d'une capacité de multiplexage du noeud IAB entre une première liaison parent avec le premier noeud parent et une deuxième liaison parent avec le deuxième noeud parent ;
l'envoi (920) d'une indication de la capacité de multiplexage à un ou plusieurs noeuds ancêtres dans le réseau sans fil ;
la réception (930), depuis le premier noeud parent, d'une première indication de disponibilité de ressources pour la première liaison parent ;
la réception (940), depuis le deuxième noeud parent, d'une deuxième indication de disponibilité de ressources pour la deuxième liaison parent, dans lequel les première et deuxième indications concernent une première ressource qui est configurée pour à la fois les première et deuxième liaisons parents ; et
la détermination (970) que la première ressource est disponible pour être utilisée par le noeud IAB uniquement lorsqu'à la fois les première et deuxième indications indiquent que la première ressource est disponible.

2. Procédé selon la revendication 1, dans lequel :
- les un ou plusieurs noeuds ancêtres comprennent l'un quelconque parmi ce qui suit : les premier et deuxième noeuds parents ; et une unité centralisée, CU, de donneur IAB qui est un noeud ancêtre d'au moins l'un des premier et deuxième noeuds parents ; ou
- le procédé comprend en outre un ou plusieurs parmi ce qui suit : le transfert (950) de la première indication au deuxième noeud parent ; et le transfert (960) de la deuxième indication au premier noeud parent, dans lequel, facultativement, les première et deuxième indications sont des messages d'informations de commande de liaison descendante, DCI, de format 2_5 respectifs.

3. Procédé selon la revendication 1 ou 2, dans lequel :
- l'un des premier et deuxième noeuds parents sert de groupe de cellules maîtres pour le noeud IAB, et l'autre des premier et deuxième noeuds parents sert de groupe de cellules secondaires pour le noeud IAB ; et/ou
- la capacité de multiplexage déterminée comprend une ou plusieurs parmi ce qui suit : une capacité de multiplexage par répartition dans le temps, une capacité de multiplexage par répartition de fréquence, et une capacité de multiplexage spatial.

4. Procédé pour une unité centralisée, CU, de donneur de liaison terrestre à accès intégré, IAB, configurée pour communiquer avec un noeud IAB dans un réseau sans fil via au moins un premier noeud parent du noeud IAB, le procédé comprenant :
la réception (1010), depuis le noeud IAB, d'une indication d'une capacité de multiplexage du noeud IAB entre une première liaison parent avec le premier noeud parent et une deuxième liaison parent avec un deuxième noeud parent du noeud IAB ;
la détermination (1020) d'une première configuration de ressources pour la première liaison parent sur la base de la capacité de multiplexage indiquée du noeud IAB ; et
l'envoi (1060) de la première configuration de ressources au moins au premier noeud parent.

5. Procédé selon la revendication 4, dans lequel :
- la CU de donneur IAB communique avec le noeud IAB via le deuxième noeud parent ; et le procédé comprend en outre : la détermination (1030) d'une deuxième configuration de ressources pour une deuxième liaison parent sur la base de la capacité de multiplexage indiquée du noeud IAB ; et l'envoi (1070) de la deuxième configuration de ressources au deuxième noeud parent ; ou
- le procédé comprend en outre la réception (1040), depuis une deuxième CU de donneur IAB qui est un noeud ancêtre du deuxième noeud parent, d'une deuxième configuration de ressources pour la deuxième liaison parent ; et l'adaptation (1050) de la première configuration de ressources sur la base de la deuxième configuration de ressources.

6. Procédé selon la revendication 5, dans lequel :
- l'envoi (1060) de la première configuration de ressources au moins au premier noeud parent comprend l'envoi (1061) de la première configuration de ressources au deuxième noeud parent ou à une deuxième CU de donneur qui est un noeud ancêtre du deuxième noeud parent ; et/ou
- le procédé comprend en outre l'envoi (1080) de la deuxième configuration de ressources au premier noeud parent.

7. Procédé selon l'une quelconque des revendications 4 à 6, dans lequel :
- l'un des premier et deuxième noeuds parents sert de groupe de cellules maîtres pour le noeud IAB, et l'autre des premier et deuxième noeuds parents sert de groupe de cellules secondaires pour le noeud IAB ; et/ou
- la capacité de multiplexage indiquée du noeud IAB comprend une ou plusieurs parmi ce qui suit : une capacité de multiplexage par répartition dans le temps, une capacité de multiplexage par répartition de fréquence, et une capacité de multiplexage spatial.

8. Procédé pour un premier noeud parent d'un noeud de liaison terrestre à accès intégré, IAB, dans un réseau sans fil, le procédé comprenant :
la réception (1110), depuis le noeud IAB, d'une indication d'une capacité de multiplexage du noeud IAB entre une première liaison parent avec le premier noeud parent et une deuxième liaison parent avec un deuxième noeud parent du noeud IAB ;
la réception (1120) d'une deuxième configuration de ressources pour la deuxième liaison parent ; et
la détermination (1140) d'une disponibilité de ressources pour la première liaison parent sur la base de la capacité de multiplexage indiquée du noeud IAB et de la deuxième configuration de ressources.

9. Procédé selon la revendication 8, dans lequel :
- le procédé comprend en outre l'envoi (1150) d'une première indication de disponibilité de ressources pour la première liaison parent à un ou plusieurs parmi ce qui suit : le noeud IAB, et le deuxième noeud parent ; et/ou
- la deuxième configuration de ressources est reçue depuis l'un parmi ce qui suit : le deuxième noeud parent, le noeud IAB, et une unité centralisée, CU, de donneur IAB qui est un noeud ancêtre d'au moins le premier noeud parent ; et/ou
- la détermination (1140) d'une disponibilité de ressources pour la première liaison parent comprend la détermination (1141) qu'une première ressource est indisponible pour la première liaison parent lorsque la deuxième configuration de ressources indique que la première ressource est configurée comme disponible pour la deuxième liaison parent ; et/ou
- la détermination (1140) d'une disponibilité de ressources pour la première liaison parent est en outre basée sur une priorisation entre les premier et deuxième noeuds parents pour la planification de ressources configurées pour à la fois les première et deuxième liaisons parents ; et/ou
- la priorisation est l'application de l'un parmi ce qui suit : l'un des premier et deuxième noeuds parents qui sert de groupe de cellules maîtres pour le noeud IAB est priorisé ; et l'un des premier et deuxième noeuds parents qui sert de groupe de cellules secondaires pour le noeud IAB est priorisé ; et/ou
- la capacité de multiplexage indiquée comprend une ou plusieurs parmi ce qui suit : une capacité de multiplexage par répartition dans le temps, une capacité de multiplexage par répartition de fréquence, et une capacité de multiplexage spatial.

10. Procédé selon la revendication 8 ou 9, dans lequel :
la deuxième configuration de ressources indique qu'une disponibilité de ressources pour la deuxième liaison parent est indiquée par le deuxième noeud parent ; et
le procédé comprend en outre la réception (1130) d'une deuxième indication de disponibilité des ressources pour la deuxième liaison parent.

11. Procédé selon la revendication 10, dans lequel :
- la deuxième indication est reçue depuis l'un parmi ce qui suit : le noeud IAB, le deuxième noeud parent, et un noeud parent des premier et deuxième noeuds parents ; et/ou
- la première liaison parent est associée à une première configuration de ressources, qui indique qu'une disponibilité de ressources pour la première liaison parent est indiquée par le premier noeud parent ; et la détermination (1140) qu'une disponibilité de ressources pour la première liaison parent est en outre basée sur la deuxième indication.

12. Noeud de liaison terrestre à accès intégré, IAB, (711, 712, 724) configuré pour communiquer avec des premier et deuxième noeuds parents (721, 722, 723, 733, 734) dans un réseau sans fil (199, 399, 700), le noeud IAB comprenant :
une circuiterie d'interface de communication (1214, 1290) et une circuiterie de traitement (1220, 1270) configurées en tant qu'un terminal mobile, IAB-MT, et une unité distribuée, IAB-DU,
dans lequel la circuiterie de traitement et la circuiterie d'interface de communication sont en outre configurées pour réaliser des opérations correspondant au procédé selon l'une quelconque des revendications 1 à 3.

13. Unité centralisée, CU, de donneur de liaison terrestre à accès intégré, IAB, (741, 751) configurée pour communiquer avec un noeud IAB (711, 712, 724) dans un réseau sans fil (199, 399, 700) via au moins un premier noeud parent intermédiaire (721, 722, 723, 733, 734) du noeud IAB, la CU de donneur IAB comprenant :
une circuiterie d'interface de communication (1290, 1370) configurée pour communiquer avec au moins le premier noeud parent et le noeud IAB ; et
une circuiterie de traitement (1270, 1360) couplée fonctionnellement à la circuiterie d'interface de communication, de telle manière que la circuiterie de traitement et la circuiterie d'interface de communication soient configurées pour réaliser des opérations correspondant au procédé selon l'une quelconque des revendications 4 à 7.

14. Premier noeud parent (721, 722, 723, 733, 734) d'un noeud de liaison terrestre à accès intégré, IAB, (711, 712, 724) dans un réseau sans fil (199, 399, 700), le premier noeud parent comprenant :
une circuiterie d'interface de communication (1214, 1290) et une circuiterie de traitement (1220, 1270) configurées en tant qu'un terminal mobile, IAB-MT, et une unité distribuée, IAB-DU,
dans lequel la circuiterie de traitement et la circuiterie d'interface de communication sont en outre configurées pour réaliser des opérations correspondant au procédé selon l'une quelconque des revendications 8 à 11.

15. Support non transitoire lisible par ordinateur (1230, 1280, 1280, 1390) stockant des instructions exécutables par ordinateur qui :
- lorsqu'elles sont exécutées par une circuiterie de traitement (1220, 1270) d'un noeud de liaison terrestre à accès intégré, IAB, (711, 712, 724) configuré pour communiquer avec des premier et deuxième noeuds parents (721, 722, 723, 733, 734) dans un réseau sans fil (199, 399, 700) configurent le noeud IAB pour réaliser des opérations correspondant au procédé selon l'une quelconque des revendications 1 à 3 ; ou
- lorsqu'elles sont exécutées par une circuiterie de traitement (1270, 1360) d'une unité centralisée, CU, de donneur de liaison terrestre à accès intégré, IAB, (741, 751) configurée pour communiquer avec un noeud IAB (711, 712, 724) dans un réseau sans fil (199, 399, 700) via au moins un premier noeud parent intermédiaire (721, 722, 723, 733, 734), configurent la CU de donneur IAB pour réaliser des opérations correspondant au procédé selon l'une quelconque des revendications 4 à 7 ; ou
- lorsqu'elles sont exécutées par une circuiterie de traitement (1220, 1270) d'un premier noeud parent (721, 722, 723, 733, 734) d'un noeud de liaison terrestre à accès intégré, IAB, (711, 712, 724) dans un réseau sans fil (199, 399, 700), configurent le premier noeud parent pour réaliser des opérations correspondant au procédé selon l'une quelconque des revendications 8 à 11.
